# EUROPÄISCHE PATENTSCHRIFT

(11) **EP 1 034 313 B1**
(45) Veröffentlichungstag und Bekanntmachung des Hinweises auf die Patenterteilung: **18.09.2002**
(21) Anmeldenummer: 98963516.4
(22) Anmeldetag: 27.11.1998
(51) Int. Cl.: C21C 5/56, F27D 13/00

(54) **VORRICHTUNGS- UND PROZESSSYSTEM ZUM VORWAERMEN VON STAHLSCHROTT**
DEVICE AND PROCESS SYSTEM FOR PREHEATING STEEL SCRAP
DISPOSITIF ET PROCEDE POUR LE PRECHAUFFAGE DE RIBLONS D'ACIER

(30) Priorität: 27.11.1997 CA 2222401
(43) Veröffentlichungstag der Anmeldung: 13.09.2000
(73) Patentinhaber: SMS SCHLOEMANN-SIEMAG AKTIENGESELLSCHAFT, 40237 Düsseldorf (DE)
(72) Erfinder: WÜNSCHE, Robert, Roy, Oshawa, Ontario L1J 6A8 (CA)
(74) Vertreter: Valentin, Ekkehard, Dipl.-Ing.
(86) Internationale Anmeldenummer: EP9807622
(87) Internationale Veröffentlichungsnummer: WO99028513

(56) Entgegenhaltungen:
- EP-A- 0 167 915
- DE-A- 1 408 782
- DE-A- 1 804 098
- US-A- 4 852 858
- US-A- 5 513 206
- PATENT ABSTRACTS OF JAPAN vol. 012, no. 022 (C-470), 22. Januar 1988 & JP 62 174315 A (DAIDO STEEL CO LTD), 31. Juli 1987

## Beschreibung

Diese Erfindung bezieht sich auf ein ökologisches, umweltfreundliches und energiehocheffizientes, autonomes, gasdichtes, selbstchargierendes Vorrichtungs- und Geschlossenkreis-Prozeßsystem zum semikontinuierlichen Selbstchargieren mit einer Kaltchargen-Eisenschrottmischung, über einen integrierten Schrottbehälter-Schrägaufzug, ihr schrittweises Vorwärmen und Zuführen von vorgewärmter Charge in einen angrenzenden, in Tandemanordnung arbeitenden metallurgischen Lichtbogenelektroofen, unter Verwendung von primärer Eigenwärme und chemischer Wärme der heißen Abgase aus dem metallurgischen Lichtbogenelektroofen, zum anschließenden energieeffizienteren, rascheren Einschmelzen der vorgewärmten Charge.

Die metallurgischen Verfahren der primären Eisen- und Stahlerzeugung gehören zu den energieintensivsten aller Produktionsverfahren in der Industrie als Ganzes. Daher war deren Gesamtenergiebilanz für Metallurgen immer von großem Interesse. Ein besseres Verständnis der Grenzen der nichterneuerbaren Energieressourcen und möglicherweise der Energiekostenkrise in den 1970ern hat intensive Aktivitäten zum Senken des Energieverbrauchs, auch seitens der Energieerzeuger und -versorger, entstehen lassen. Ferner werden die ökologischen Erwägungen und die Lebensnotwendigkeit zum Umweltschutz immer mehr zu entscheidenden Faktoren, um alle Branchen der Industrie zu steuern. Da die metallurgischen Prozesse der Eisen- und Stahlerzeugung auch zu hohen Emissionen luftverschmutzender, toxischer Gase sowie zur Produktion von festen gefährlichen Abfällen führen, ist es logisch, daß sie mehr und mehr in den Brennpunkt des öffentlichen Interesses und hauptsächlich der staatlichen Behörden, die für eine saubere Umwelt verantwortlich sind, rücken. Aus den vorgenannten Gründen gibt es weltweite Bemühungen, die Energiebilanz der metallurgischen Verfahren dadurch zu verbessern, daß die Energieeffizienz so weit wie möglich verbessert wird. In einem bestimmten Maß ist dies dadurch erreicht worden, daß die eine Art Brennstoff oder Energie durch eine andere Art ersetzt wurde, die für das spezifische Verfahren oder eine bestimmte Verfahrensstufe geeigneter ist, unter größter Berücksichtigung und Erwägung hinsichtlich Ökologie, Ökonomie und Verfügbarkeit. Es ist offensichtlich, daß die erste Priorität, den Energieverbrauch der Mehrheit der metallurgischen Schmelz- und Einschmelzverfahren zu reduzieren, die höchstmögliche Ausnutzung der bislang brachliegenden Prozeßsystem-Energieverluste, wie beispielsweise die Eigenwärme und chemische Wärme der ausgestoßenen Abgase, ist. Durch Rückführung eines Teils dieser Energie über die direkteste Route, die möglich ist, in den metallurgischen Prozeß, der die ausgestoßenen Abgase hervorrief, werden die anfänglichen Energieerfordernisse reduziert, was eine höhere Gesamtenergieeffizienz des Prozesses zur Folge hat. Dementsprechend führen sehr ernsthafte und gut durchdachte Bemühungen, in den Abgasen enthaltene Abfallenergie zu nutzen, auf möglichst direktem Wege, zu Konstruktionen, welche energierückgewinnende Einrichtungen zum Schrottvorwärmen in eine derzeitige Lichtbogenelektroofenstruktur einbrachten. Im Gegensatz zu den Erwartungen erreichen diese bereits bekannten amalgamierten Lichtbogenelektroofen-Aggregate, von komplizierter Konstruktion, bislang nur einige von allen voraussichtlichen Leistungsresultaten. Hohe Anschaffungskosten und Installationskosten, Versagen von Mechanismen, extensive Wartung, Verunreinigungs- und Sicherheitsprobleme, die in gefährlichen Explosionen kulminieren, sind wesentliche Gründe, Fragen vorzubringen hinsichtlich ihrer Eignung im allgemeinen. Auf der Grundlage der derzeitigen und zukünftigen Umweltschutzvorschriften wird dieser Fragenkomplex zunehmend wichtig, da die toxischen Emissionen aus den Schrottvorwärmeinrichtungen des derzeitigen Stands der Technik nicht allen Bestimmungen und Kriterien der gültigen oder geplanten Vorschriften hinsichtlich der zulässigen Höchstwerte für toxische Substanzen, die in die Atmosphäre abgegeben werden, entsprechen.

Andererseits war es wohlbekannt, daß die am meisten zusagende und effizienteste Methode zur indirekten Energieeinsparung, insbesondere für die Lichtbogenelektroofen-Stahlerzeugung aus Schrott, das Hochtemperatur-Vorwärmen einer Metallcharge vor dem Beschicken des Ofens, in einer separaten Heizeinrichtung, besser bekannt als "Vorchargier-Schrottvorwärmung", ist. Wie dem auch sei, wegen der Nichtverfügbarkeit einer vollständig entwickelten Konstruktion dieses Typs von Schrottvorwärmeinrichtungen für die Lichtbogenelektroofen-Stahlerzeugung wurde sie nur sporadisch verwendet bei einer unterentwickelten "Schrottim-Kübel-Vorwärm"-Konfiguration.

Zusammen mit den wachsenden Energie- und ökologischen Bedenken gibt es fortwährende Bemühungen, wirklich alle Phasen des Lichtbogenelektroofen-Stahlerzeugungsverfahrens zu intensivieren, vor allem Erhöhung der Produktivität und Reduzierung der Betriebskosten. Zum Beispiel, weitere Erhöhungen der elektrischen Leistungseingabe über optimal erhöhte sekundäre Spannung, begleitet von einer adäquaten Schaumschlacken-Praxis; sofortige Rückgewinnung der chemischen Energie durch Nachverbrennung der brennbaren Gase direkt in dem Ofenbehältnis, bevor sie ausgestoßen werden; Hinzufügung von Oxy-Fuel-Brennern zu dem Ofenbehältnis zur Intensivierung und Beschleunigung von rascher Schrotteinschmelzung; Vorwärmen der Eisenschrott-Charge vor dem Beschicken des Ofens, durch Verwendung von Eigenwärme- und chemischer Wärmeenergie, welche in den Abgasen enthalten ist, plus Oxy-Fuel-Brenner, und schließlich Einführung von Ultraschall-Gasform-Sauerstofflanzen zur Intensivierung der Kohlenstoffentziehung und Aufschäumung der Schlacke.

Von den vorgenannten Prozeßintesivierungsmethoden sind die drei Methoden zum Erhöhen der Temperatur von Schrott durch andere Mittel als über einen Lichtbogen: sofortige Rückgewinnung der chemischen Energie in dem Behältnis via Nachverbrennung; und Hinzufügung von Oxy-Fuel-Brennern zu dem Ofenbehältnis sowie Vorwärmen der Eisenschrott-Charge vor der Beschickung des Ofenbehältnisses mit der Charge.

Der Zweck der ersten Methode ist die sofortige Rückgewinnung der chemischen Energie direkt in dem Ofenbehältnis, durch Verbrennen, via gasförmigen Sauerstoff, der brennbaren Komponenten der durch den Schrotteinschmelzungsprozeß entwickelten Abgase, bevor sie ausgestoßen werden. Diese Methode wird mit wechselndem Erfolg bei Siemes-Martinöfen, basischen Sauerstoff-Aufblas-Konvertern und energieoptimierenden Öfen verwendet. Das Vorwärmen von sauerstoffangereicherter Luft durch die Eigenwärme von bereits aus dem Behältnis ausgestoßenen Abgasen wird an Stelle von gasförmigem Sauerstoff verwendet, als eine Variante dieser Methode. Trotzdem zeigt diese Methode, auf Lichtbogenelektroöfen angewendet, nur eine begrenzte Produktivitätsverbesserung und Einsparung von elektrischer Energie, hauptsächlich, wenn sie während der Stufe der Schrotteinschmelzung gleichzeitig mit dem Lichtbogen verwendet wird, wobei eine tatsächliche Energieeinsparung die Folge des In-situ-Schrottvorwärmens ist. Die Verwendung einer Nachverbrennung in Lichtbogenelektroöfen mit bereits geschmolzenem Schrott wird in Wirklichkeit signifikant gedrosselt durch eine nichtzufriedenstellende Wärmeübertragungseffizienz von den Nachverbrennungsgasen her in das Bad, das durch eine tiefe Schicht aus thermisch isolierender und schaumiger Schlacke abgedeckt wird. Eine Verbrennung, oder eine sogenannte Nachverbrennung, der brennbaren Komponenten der Abgase, die aus der schaumigen Schlacke austreten, erhöht die Temperatur und folglich das Volumen der Abgase in dem freien Raum über der Schlacke. Der sukzessive, proportional erhöhte Druck der Abgase in dem Ofenbehältnis vermindert daher eine Aspiration der kalten Umgebungsluft in das Ofenbehältnis. Während die notwendige Innentemperatur des Ofenbehältnisses gleichgehalten wird, wird somit das Elektroenergie-Erfordernis zum Erwärmen der kalten Luft eliminiert, was letztlich seine Einsparung zur Folge hat. Es sei darauf hingewiesen, daß, verglichen mit der Nachverbrennung, die zusätzlichen Sauerstoff benötigt, was die Kosten erhöht, gleiche oder höhere Energieeinsparung, ohne irgendwelche Kosten, durch adäquates Versiegeln des Ofenbehältnisses erreicht wird, und in dieser Hinsicht das Eindringen von Kaltluft verhindert wird. Darüber hinaus ist ein konsequenter und außergewöhnlicher Nutzen einer adäquaten Versiegelung des Lichtbogenelektroofens eine drastisch reduzierte Menge heißer Abgase, die aus dem Ofen auszustoßen sind. Im Falle eines 110-tonnes-Ofens wurde, zum Beispiel, die Menge der zu handhabenden Gase um mehr als 50 % (von 90.000 Nm³/h auf 40.000 Nm³/h) reduziert, wodurch das Stoppen einer der Entlüfter möglich wird.

Der Zweck der zweiten Methode zum Erhöhen der Temperatur des Schrotts durch andere Mittel als durch einen Lichtbogen ist eine Intensivierung und Beschleunigung der schnellen Schrotteinschmelzung durch Hinzufügung von Oxy-Fuel-Brennern in das Ofenbehältnis. Obwohl positive Ergebnisse erreicht wurden durch Einführung von Oxy-Fuel-Brennern zum schnelleren Erschmelzen des Schrotts in dem Bereich des Schlackentürtunnels des Lichtbogenelektroofenbehältnisses vor mehr als 30 Jahren, sind diese in großem Umfang nicht benutzt worden, bis dann Ultra-High-Power-Öfen mit wassergekühlten Paneelen gebaut worden sind. Die nützliche Leistungsfähigkeit von Kurzflammen-Oxy-Fuel-Brennern, in den Behältniswänden in den "kalten" Zonen zwischen den Elektroden angeordnet, haben ein Verkürzen der Zeit für das Einschmelzen des gesamten Schrotts in dem Ofen mit sich gebracht. Diese positiven Ergebnisse riefen eine neue Lawine von Brenner-Hinzufügungen zu den Behältnissen der Lichtbogenelektroöfen hervor. In den vergangenen Jahren sind zahlreiche Arten von Oxy-Fuel-Brenner-Konstruktionen mit immer größeren Kapazitäten für Lichtbogenelektroöfen verfügbar gemacht worden. Derzeit stellt die thermische Energieeingabe dieser Brenner in einigen Fällen mehr als 50 % der anfänglichen Leistungseingabe an elektrischer Energie dar. Obwohl diese kostenniedrige Hinzufügung zu der Gesamtleistungseingabe die Anstich-zu-Anstich-Zeiten verkürzt, mit der gewünschten Produktivitätszunahme, und einige andere betriebliche und ökonomische Vorteile mit sich bringt, werden viele andere schwerwiegende Nachteile übersehen und verschwiegen. Im allgemeinen sind einige der größeren Nachteile: höhere Oxidation des Schrotts, größeres Volumen der Abgase, wesentlich herabgesetzte Wärmeübertragungseffizienz, wenn die Brenner gleichzeitig mit der Lichtbogen-Leistungseingabe betätigt werden, insbesondere, wenn die Brenner die ganze Zeit während der Schmelzung arbeiten. Praktische Betriebsergebnisse haben bewiesen, daß die höchste Energieeffizienz erreicht wird, wenn die Schmelzung nur mit Brennern begonnen wird, die erst durch Lichtbögen ersetzt werden, nachdem die Charge eine Temperatur von etwa 800 °C erreicht hat. Diese zweistufige Betriebspraxis resultierte in einer Einsparung von 15-20 % an elektrischer Energie und 10-15 % Einsparung an fossilem Brennstoff und Sauerstoff. Wegen der aufeinanderfolgenden Anwendung beider Arten von thermischer Energie ist jedoch die Anstich-zu-Anstich-Zeit um 10-12 % erhöht worden. Ökonomisch sind die Kosten für den Einbau von Oxy-Fuel-Brennern in das vorhandene Ofenbehältnis relativ niedrig, doch in nahezu allen Fällen hatte es wesentliche Kosten für das Umbauen/Vergrößern des gesamten Entlüftungssystems zur Folge. Von einem umfassenden ökologischen Standpunkt aus ruft der Betrieb solcher Lichtbogenelektroöfen, mit übermäßiger Verwendung von Oxy-Fuel-Brennern und verminderter Energieeffizienz, ein unproportional höheres Volumen von gefährliche Komponenten enthaltenden Abgasen hervor, und solche Verfahren werden kategorisch unakzeptabel.

Die Zielsetzung der dritten Methode, bei der die Temperatur des Schrotts durch andere Mittel als durch einen Lichtbogen erhöht wird, ist das Vorwärmen der Eisenschrott-Charge vor dem Beschicken des Ofens durch eine effiziente Ausnutzung der Eigenwärmeenergie und der chemischen Wärmeenergie, die in den Abgasen enthalten ist, plus Verwendung von Oxy-Fuel-Brennern, falls aus ökologischen Gründen und Bedenken notwendig.

Seit seiner Einführung durchlief das Schrottvorwärmen verschiedene Entwicklungsstufen: Partie-Vorwärmen in dem Chargierkübel mit heißen Abgasen aus dem Ofen oder mit Luft- und Oxy-Fuel-Brennern; kontinuierliches Vorwärmen durch schrägen Drehtrommelofen oder horizontalen Vibrationsförderer, unter Verwendung einer Kombination von heißen Abgasen aus dem Ofen und Luft- und Oxy-Fuel-Brennern; kontinuierlicher, vertikaler Vorwärmmechanismus mit gesteuerter Schrottabwärtsbewegung, wobei es sich um einen integralen Teil des Ofens handelt, und unter Verwendung heißer Abgase aus dem Ofen in gegenläufiger Strömung, und ebenso "In-situ"-Vorwärmen des bereits in den Ofen chargierten Schrotts zu Beginn der Schmelzung, gleichzeitig mit einem Lichtbogen, durch eine Vielfalt unterschiedlicher Konstruktionen von Luft- und Oxy-Fuel-Brennern. Es gibt weitere andere einzigartige Schrottvorwärmmechanismen, bei welchen es sich um Kombinationen der oben erörterten Systeme handelt und welche mit mehr oder weniger Erfolg arbeiten.

Das derzeitige Schrottvorwärmen erreicht mehr und mehr die lange überfällige Anerkennung. Durch Erkennen seines großen Potentials kann nunmehr davon ausgegangen werden, daß es der nächste Produktionsprozeß-Meilenstein für die Lichtbogenelektroofen-Stahlerzeugung, hauptsächlich aus Schrott, sein wird, in bezug auf die Einsparung elektrischer Energie, eine Reduzierung des Elektroden-Verbrauchs, eine Produktivitätssteigerung durch Verkürzen der Abstich-zu-Abstich-Zeit sowie die sehr wichtigen Vorzüge hinsichtlich Reduzierung von Umweltverschmutzung im allgemeinen.

Aus der Erfahrung bei dem Stahlerzeugungsprozeß in einem Lichtbogenelektroofen, hauptsächlich aus einer Recycling-Mischung aus Eisencharge/Kaltstahlschrott, konnte geschlossen werden, daß adäquates Vorwärmen des Schrotts vor dem Chargieren in den Ofen zum schnellen effizienten Schmelzen der geeignetste Weg ist.

In der jüngsten Vergangenheit sind verschiedene Arten von Anlagen und Verfahren zum Vorwärmen von Schrott eingeführt und der Lichtbogenelektroofen-Stahlerzeugungsindustrie zugänglich gemacht worden, im allgemeinen gemäß den folgenden US-Patenten:

Das US-Patent No. 4,543,124 (24.09.1985) beschreibt eine "Vorrichtung zur kontinuierlichen Stahlerzeugung", die in der Industrie als Vorrichtung für den "Consteel-Prozeß" bekannt ist. Das Verfahren verwendet das Ofen-Abgas sowie Brennstoff, um den Schrott "vorzuchargieren"/vorzuwärmen, der sich auf einem Förderer in einem speziellen, horizontalen Vorerhitzer-Tunnel bewegt. Der Schrott wird durch das Loch in der Ummantelungsseitenwand in den Ofen befördert. Das Abgas strömt gegenläufig zu dem Schrott. Der Lichtbogenelektroofen behält einen flüssigen letzten Rest bei, im Anschluß an den Abstich. Ein elektrischer Energieverbrauch in dem Bereich von 350-400 kWh/ton ist zu hoch, verglichen mit den derzeitigen Lichtbogenelektroofen-Verbrauchs-Standards. Die Vorrichtung an sich benötigt viel Raum für Förderer; das Schrottvorwärmen auf Förderern ist nicht sehr energieeffizient, weil der Schrott vorwiegend von oben vorgewärmt wird.

Das US-Patent No. 4,852,858 (01.08.1989) beschreibt einen "Chargiermaterial-Vorerhitzer zum Vorwärmen von Chargiermaterialien für eine Metallurgische Schmelzeinheit". Der in der Industrie als "energieoptimierender Ofen" bekannte Vorerhitzer hat günstige Ergebnisse und wird in der Produktion verwendet. Jedoch ist diese semikontinuierliche, vertikale Schrottvorwärmvorrichtung mit gesteuerter Schrottabwärtsbewegung ein integraler Teil eines nichtelektrischen metallurgischen Ofens, unter Verwendung von Gegenstrom-Heißabgasen aus nahezu vollständiger Nachverbrennung in dem Ofenbehältnis, das unter der Vorwärmvorrichtung angeordnet ist. Günstige Betriebsresultate dieser Konstruktion regten möglicherweise einige Konstrukteure elektrometallurgischer Einrichtungen dazu an, diese Konzeption, beträchtlich modifiziert, für den Lichtbogenelektroofen zu adaptieren. Die Konstruktionshöhe und eine große, unkontrollierte Infiltration der Falschluft in die einzelnen Kammern werden als Nachteile angesehen.

Das US-Patent No. 5,153,894 (06.10.1992) beschreibt eine "Schmelzanlage mit entfernbarem, schachtartigen Chargiermaterial-Vorerhitzer", in der Industrie als "Schachtofen" bekannt. Es handelt sich um eine partiechargierte Schmelzanlage mit einem schachtartigen Material-Vorerhitzer, der einen integralen Teil des Ofens darstellt und mit gegenläufiger Heißgas-Strömung arbeitet. Durch eine horizontale relative Bewegung zwischen dem Ofenbehältnis und der Haltestruktur bzw. Warmhaltestruktur, gemeinsam mit der Behältnisabdeckung, kann Chargiermaterial von einem Schrottkorb direkt in das Ofenbehältnis oder durch den verschobenen Schacht in unterschiedliche Regionen des Ofenbehältnisses chargiert werden. Das Chargiermaterial kann in dem Schacht mittels eines Blockierbauteils darin zurückgehalten werden und während der Frischungs/Vergütungsphase erhitzt werden. Eine der Alternativen hat verschiedene Konstruktionsprobleme, wie beispielsweise eine komplizierte Konstruktion, durch Partiechargieren in den Ofen von dem Schacht her manifestiert, zwei schwenkende Bauteilgruppen, um direktes Chargieren von oben zu ermöglichen oder die Ummantelung auszutauschen, eine unförmige Gestaltung der Ummantelung infolge der seitenmontierten Schachtstruktur zum Schrottvorwärmen, die Kippanordnung lediglich der Ummantelung bringt eine große Lücke zwischen Ummantelung und Dach mit sich, was Wärmeverluste zur Folge hat, ungesteuerte Schrottabwärtsbewegung durch den Schacht hindurch, was gelegentliches Verklemmen und Rutschen eines großen Anteils von Schrott hervorruft, unpassende gegenläufige Strömung von Gasen durch den Schacht hindurch, was ungleichmäßiges Vorwärmen des Schrotts in dem Schacht zur Folge hat, und zwei schwerwiegende Verarbeitungssystemprobleme: zeitweiliges, unkontrollierbares Entstehen eines explosiven Gemischs und Emission toxischer Substanzen infolge niedriger Temperatur der Abgase an dem Ausgang von dem Schacht her. Zusätzlich zu der Tatsache, daß das erneute Erhitzen dieser Gase über Brenner im Prinzip und de facto den Zweck dieser Art von Vorwärmsystem vereitelt, werden die Möglichkeit einer Emission toxischer Substanzen sowie die Möglichkeit von Explosionen nicht beseitigt, und sie geschehen von Zeit zu Zeit bei jeder dieser Art von Öfen.

Das US-Patent No. 5,264,020 (23.11.1993) beschreibt eine "Schmelzanlage mit zwei Schmelzöfen, in nebeneinanderliegender Beziehung angeordnet", die in der Industrie als "Doppelschachtofen" bekannt ist. Dieser ist tatsächlich ein Aggregat von zwei nebeneinander angeordneten Schachtöfen, die abwechselnd betätigt werden, bei denen die Ofengase, die bei dem Schmelzprozeß erzeugt werden, entsprechend in den anderen Schmelzofen eingeführt werden, zum Zwecke des Vorwärmens des Chargiermaterials. Jedem Schmelzofen ist ein Schacht zugeordnet, der mit Chargiermaterial beladen wird. Die Abgase aus dem Ofen, der sich in dem Schmelzbetriebsmodus befindet, werden von dem Schacht her, nach dem Chargieren des anderen Ofens, durch die Abdeckung des anderen Ofens hindurch eingeführt und werden aus dem Schacht desselben entfernt. Diese Vorgehensweise ermöglicht, während des gesamten Schmelzvorgangs, ein Vorwärmen des Chargiermaterials und eine Filtration der Ofengase, wenn sie durch das Chargiermaterial hindurch geleitet werden. Da der "Doppelschachtofen" dem "Schachtofen" de facto sehr ähnlich ist, mit einer leicht unterschiedlichen Chargieranordnung, sind alle Erläuterungen, die sich auf den "Schachtofen" beziehen, auch für dieses Ofen-Aggregat zutreffend.

Das US-Patent No. 5,499,264 (12.03.1996) beschreibt ein "Verfahren und Anordnung zum Betreiben einer Doppelofen-Anlage", die in der Industrie als "Zwillingsmantel-Ofen" bekannt ist. Diese Anordnung ist de facto auch ein Aggregat aus zwei praktisch vollständigen mechanischen Bauteilgruppen von einzelnen Lichtbogenelektroöfen, eventuell in Nebeneinanderanordnung. Sie ist offenbart als: Ein Verfahren zum Betätigen einer Doppelofen-Anlage mit zwei Lichtbogenöfen, verbunden über eine Leitung, eine Stromversorgung, eine Einrichtung für Chargiermaterial sowie eine Anordnung für den Abzug und die Reinigung von Gas. Das Verfahren schließt ein: den Verfahrensschritt, einen ersten Ofen der zwei Öfen mit der Stromversorgung zu verbinden, zum Erschmelzen einer darin befindlichen Charge, vollständiges Abschalten eines zweiten Ofens der Öfen von der Stromversorgung. Der zweite Ofen wird mit Chargiermaterial beschickt und wird mit einer Abdeckung verschlossen. Rauchgas, das sich in dem geschlossenen zweiten Ofen befindet, wird über der Begichtungssäule abgesaugt, und Rauchgas wird aus dem ersten Ofen über der Oberfläche der geschmolzenen Charge durch den zweiten Ofen hindurch durch die Verbindungsleitung, die zwischen den zwei Öfen vorgesehen ist, abgesaugt. Eine Rauchgasverbindung des ersten Ofens mit der Gasreinigungsanordnung wird unterbrochen, während das Rauchgas aus dem zweiten Ofen abgesaugt wird, während Zuführungsluft gleichzeitig in dem Bereich einer Abdeckung des ersten Ofens aufgenommen wird.

Im Prinzip ist die Strömung der Vorwärmgase in bezug auf den Schrott gegenläufig. Eine höhere Produktivität wird durch komplexe Konstruktion des Abzugssystems erreicht. Das Schrottvorwärmen ist uneinheitlich, was zu höheren Oxidationsverlusten führt. Das Beschicken der zwei Behältnisse von oben erfordert immer noch das Entfernen des Ofendachs, was zu zusätzlichen Wärmeverlusten führt.

Das US-Patent No. 5,513,206 (30.04.1996) beschreibt eine "Vorrichtung zum Vorwärmen und Chargieren von Schrottmaterial". Diese Vorrichtung zum Vorwärmen und Chargieren von Schrottmaterial umfaßt eine schachtartige Vorwärmkammer und eine Beschickungseinheit. Das Ofenabgas strömt gegenläufig zu dem herabfallenden Schrott. Ein zweistufiger Schrottschieber liefert die Charge durch die Öffnung in dem Dach in einen Raum zwischen den zwei Gleichstrom-Elektroden. Der Zwei-Elektroden-Gleichstrom-Ofen, der den vorgewärmten Schrott aufnimmt, ist vollständig abgedichtet und verwendet keine wassergekühlten Wandpaneele. Dieser Ofen ist von äußerst komplexer Konstruktion. Das Schrottschieben ist kompliziert. Der Schacht ist schmal und ist daher mit mehreren Antizusammenbakkungseinrichtungen ausgerüstet. Auch die hohe Konstruktionshöhe ist ein signifikanter Nachteil.

Das US-Patent No. 5,555,259 (10.09.1996) beschreibt ein "Verfahren und Vorrichtung zum Einschmelzen von Schrott", das in der Industrie als "Contiarc" bekannt ist. Der offenbarte Ofen ist ein mit einem Gleichstrom-Lichtbogen beheizter Schachtofen, mit einem ringförmigen Schacht, durch äußere und innere Behältnisse vorgesehen, die eine zentrale Graphitelektrode umgeben und schützen. Schrott wird mit einem geeigneten System in dem oberen Teil des ringförmigen Schachts mit einer Rate, die der Einschmelzrate in der unteren Sektion des Ofens entspricht, kontinuierlich zugeführt. Während seiner Abwärtsbewegung wird der Schrott durch die aufsteigenden Gase vorgewärmt. Wenn diese Gase auf niedriger Temperatur oben aus der Schrottsäule ausströmen, werden sie in einer Ringleitung aufgefangen und zur Abgasbehandlung wegbefördert. Es wird beansprucht, daß dieser Ofen ein geringes Volumen an Staubemission durch Abgase haben wird, infolge der Filterungswirkung der Schrottsäule. Diese Konstruktion ist gemäß den Bemühungen vorgesehen, einen Elektroofen und Schrottvorwärmung in einer einzigen, amalgamierten Konstruktion zu kombinieren. Das Schrottchargiersystem ist kompliziert, die Schrottabwärtsbewegung wird nicht gesteuert; daher wird Brückenbildung bzw. vorzeitige Erstarrung oder Zusammenbacken, stattfinden. Der Ofen hat keinen Kippmechanismus, und daher wird ein Ersatz oder Austausch des unteren Teils schwierig werden.

Das US-Patent No. 5,573,573 (12.11.1996) beschreibt eine "Lichtbogenelektroofen-Anordnung zur Stahlerzeugung", die in der Industrie als "Comelt" bekannt ist. Offenbart ist ein Lichtbogenelektroofen zur Erzeugung von Stahl durch Einschmelzen von Schrott, insbesondere Eisenschrott, und/oder Schwammeisen und/oder Roheisen sowie Zuschlägen in einem Ofenbehältnis, in das mindestens eine Graphitelektrode vorragt, die in ihrer Längsrichtung verschiebbar ist, wobei ein Lichtbogen gezündet wird zwischen der Graphitelektrode und dem Chargiermaterial. Um eine besonders hohe Energieeingabe zu erreichen, ragt die schräge Graphitelektrode in einen unteren Teil des Ofenbehältnisses von einer Seite vor, und der untere Teil, in dem Bereich der Graphitelektrode, weist eine Vergrößerung auf, die relativ zu dem oberen Teil radial nach außen herausragt. Der Ofen hat einen verlängerten vertikalen Schacht und wird kontinuierlich mit Kaltschrott über einen Förderer beschickt. Es wird beansprucht, daß die Abgase, gegenläufig zu dem sich abwärts bewegenden Schrott, oben in dem Schacht, nach Vorwärmen des Schrotts, noch genügend heiß sind und durch Verdünnung rasch abgekühlt werden, so daß keine toxischen Gase entstehen. Bei einer anderen Version werden die Gase gesammelt. Dies ist eine komplexe, amalgamierte Konstruktion, die einen sehr geringen Verbrauch von elektrischer Energie beansprucht.

Aus der US 4,852,858 ist eine Schrottvorwärmeinrichtung bekannt, die im wesentlichen aus einem Gefäß besteht, das über einen entfernbaren Deckel befüllt wird. Das Gefäß weist Gatter auf, die zwischen einer geschlossenen und einer geöffneten Position hin- und herbewegbar sind, wobei sie bei der geöffneten Stellung aus dem Gefäß herausgeschwenkt werden. Die Vorwärmeinrichtung ist auf einem metallurgischen Ofen angeordnet. Die Vorwärmung des durch Schwerkraft innerhalb des Gefäßes mit Zwischenstation auf den Gattern herabfallenden Schrotts erfolgt durch einen gegenläufig strömenden Abgasstrom aus dem Ofengefäß heraus.

Darüber hinaus haben alle oben aufgeführten konventionellen Verfahren einen fundamentalen, eindeutigen Nachteil und Mangel: die gegenläufige Strömung der heißen Abgase zu der Strömung bzw. Bewegungsrichtung des Schrotts ist ein fundamentales, funktionell widriges Merkmal. Bei der Mehrheit der Fälle der konventionellen Schrottvorwärmvorrichtungen, -einrichtungen und -prozeßsysteme ist dies der Hauptgrund für deren nicht zufriedenstellende Leistung.

Ein Beispiel für eine Vorwärmung mit gleichlaufender Strömung des vorzuwärmendem Schrotts in der Vorwärmeinrichtung sowie des heißen Abgases aus dem metallurgischen Ofen zeigt die JP 62 17 4315. Die Vorwärmeinrichtung ist oberhalb des Deckels des Ofens angeordnet. Der Schrott wird mittels Schwerkraft durch Öffnen von Gattermitteln, die den Schrott für eine bestimmte Vorwärmdauer zurückhalten, in den Ofen befördert.

Zusammengefaßt, in bezug auf Produktivität, Energieeinsparung, Verunreinigung bzw. Verseuchung und nicht zuletzt die Betriebssicherheit lassen die Ergebnisse aus den Bemühungen zur Intensivierung des Verfahrens zur Stahlerzeugung im Lichtbogenelektroofen, vorwiegend aus Schrott, unter Verwendung der herkömmlichen Schrottvorwärmanlagen deutlich erkennen, daß ihr erreichtes Niveau unter den erreichbaren Leistungsniveaus einer "Vorchargier"-Schrottvorwärmvorrichtung liegt, unter ordnungsgemäßer Anwendung der fundamentalen Gesetze der Physik und einer richtigen Verwertung der praktischen Erfahrung.

### Aufgaben der Erfindung

Eine Aufgabe der vorliegenden Erfindung ist es, ein autonomes, unabhängig arbeitendes, supplementäres, energieeffizientes, verunreinigungreduzierendes und sicher arbeitendes Vorrichtungs- und Prozeßsystem, mit gleichlaufender Strömung von Schrott und heißen Abgasen, vorzusehen. Die Erfindung sieht ein semikontinuierliches, selbstchargierendes, gesteuertes, abgestuftes und graduelles Vorwärmen von Kalteisenschrottmischung/Stahlschrott und Entladen von vorgewärmtem Schrott in einen angrenzenden in Tandemanordnung arbeitenden, abgedichteten metallurgischen Lichtbogenelektroofen vor, um alle voraufgeführten Mängel und Nachteile zu überwinden.

Ein anderes Ziel der Erfindung besteht darin, eine vertikale Hauptkammer von anhaftend prismatischer Form, mit einem pyramidenförmigen, konvergierenden Teilstück an ihrem Boden und einer entfernbaren Abdichtungsabdeckung an der Spitze der Kammer, zum semikontinuierlichen Zuführen/Chargieren der kalten Charge aus einer Eisenschrottmischung in die Kammer, vorzusehen.

Ein anderes Ziel der Erfindung besteht darin, eine vertikale Hauptkammer, mit Wänden, die aus feuerfesten oder wassergekühlten Segmenten bestehen, die an eine geeignete, selbständige, abstützende Struktur angefügt sind, vorzusehen.

Ein anderes Ziel der Erfindung besteht darin, einen unabhängig arbeitenden, einfachen und stabilen chargierenden/liefernden Mechanismus zum semikontinuierlichen Zuführen einer Kalteisenschrottmischung aus dem angrenzenden Schrottlager, vorzusehen. Der Chargiermechanismus ist vorzugsweise auf einem unteren Etagenniveau angeordnet und arbeitet unabhängig, ohne die Verwendung eines separaten Chargierkübels oder Laufkrans zu benötigen. Auch wird der Schrott vorzugsweise in die oberste Abteilung der vertikalen Hauptkammer, die mit einem chargierenden, öffnenden, abdichtenden Verschluß ausgerüstet ist, gekippt, wobei der Chargiermechanismus in der Hauptsache aus mindestens einem Hochgeschwindigkeits-Schrägaufzug besteht, der mit einem permanenten Chargierbehälter ausgerüstet ist.

Ein anderes Ziel der Erfindung besteht darin, einen oder mehrere robuste und adäquat gekühlte Schrottgravitationsabwärtsbewegungssteuerungsmechanismen vorzusehen, die jeweils aus Rahmen mit Semi-Eisenrosten bestehen, die gesteuerte sequentielle rotierende und rückziehende/erweiternde Bewegungen durchführen, welche das Volumen der vertikalen Hauptkammer in mindestens zwei Abteilungen unterteilen, die fähig sind, jederzeit nicht weniger als die nominale Charge, die für eine Schmelze des angrenzenden, in Tandemanordnung arbeitenden metallurgischen Lichtbogenelektroofens erforderlich ist, zu halten.

Ein anderes Ziel der Erfindung besteht darin, einen oder mehrere Oxy-Fuel-Brenner, mit Schnellkontrolle des variablen Sauerstoff/Brennstoff-Verhältnisses, in jeder Abteilung der vertikalen Hauptkammer vorzusehen, zur kontinuierlich gesteuerten Verbrennung der brennbaren Gase, die durch die gesamte Höhe der vertikalen Hauptkammer hindurch entstehen, was gesteuertes, graduelles Vorwärmen der chargierten Eisenschrottmischung auf die benötigte Temperatur zur Folge hat, vor dem Entladen in den Ofen.

Ein anderes Ziel der Erfindung besteht darin, Sensoren in jeder Abteilung der vertikalen Hauptkammer und an anderen Lokationen der Gasströmungsleitungen vorzusehen, zur Realzeitsofortanalyse der Gase und Temperaturmessung, zur sofortigen Korrektur und Steuerung des richtigen Evakuierdrucks und der graduellen Verbrennung der brennbaren Gase, während des Vorwärmprozesses entwickelt, verwendet.

Ein anderes Ziel der Erfindung besteht darin, einen einfachen, stabilen, hitzebeständigen Entlademechanismus vorzusehen, zum gesteuerten Entladen des auf hohe Temperatur vorgewärmten Schrotts aus der Öffnung in dem konvergierenden unteren Teil der vertikalen Hauptkammer und zum Zwangszuführen des vorgewärmten Schrotts in den angrenzenden metallurgischen Lichtbogenelektroofen durch die Öffnung in der Mantelseitenwand oder in dem Dach hindurch. Der Entlademechanismus besteht in der Hauptsache aus einem gleitenden Verschluß der Öffnung in einem konvergierenden Teil der vertikalen Hauptkammer, einer Schrottnivellierwalze und einer schrägen, sich hin- und herbewegenden Hebe-Einrichtung, mit einem Förderwagentrog, der mit einem internen Kolben, mit Hin- und Herbewegung, ausgerüstet ist.

Ein anderes Ziel der Erfindung besteht darin, zwei Einlaßöffnungen an dem höchsten Punkt der oberen Abteilung vorzusehen, eine von diesen Öffnungen für den Eintritt heißer Abgase aus dem metallurgischen Lichtbogenelektroofen und Eigenwärme- und chemische thermische Energie enthaltend und die zweite Öffnung für den Eintritt partiell rezirkulierter, rückgewonnener heißer Gase aus der endgültigen Nachverbrennungskammer.

Ein anderes Ziel der Erfindung besteht darin, einen kommensurabelen negativen Druck vorzusehen, der geeignete Saugwirkungen an unterschiedlichen Punkten der Vorrichtung hervorruft und, höchst wichtig, eine Kombination bzw. Bindung jedweder Gase, die in die vertikale Hauptkammer eintreten, erzwingt, um von dem höchsten Punkt der oberen Abteilung abwärts durch die Schichten des Schrotts in Richtung der Strömung, gleichlaufend mit der Strömung des sich durch die Schwerkraft nach unten bewegenden Schrotts, zu strömen, wobei kombinierte heiße Gase die anfänglichen heißen Abgase aus dem in Tandemanordnung arbeitenden metallurgischen Lichtbogenelektroofen, rückgewonnene heiße Gase aus der Endpunkt-Nachverbrennungskammer, heiße Gase, durch Oxy-Fuel-Brenner erzeugt, in den Wänden der Abteilungen angeordnet, sowie heiße Gase, die aus der Oxidation der verbrennbaren Substanzen entstehen, die in der Charge enthalten sind, über beigegebenen Sauerstoff, sauerstoffangereicherte Luft oder Luft, umschließen.

Ein anderes Ziel der Erfindung besteht darin, einen Satz aus zwei parallelen und analogen, kombinierten Endverbrennungskammern/divergierenden Staubfängern und einer Drop-out-Box, direkt und vertikal inline unter der entladenden, konvergierenden unteren Abteilung der vertikalen Hauptkammer vorzusehen, wobei heiße Abgase aus den zwei Schlitzöffnungen in dem konvergierenden Boden der vertikalen Hauptkammer in den obersten Teil jeder der Endverbrennungskammern/Staubfänger, mit Oxy-Fuel-Brennern mit variablem Verhältnis ausgerüstet, gerichtet werden, zur endgültigen vollständigen Verbrennung der verbrennbaren Substanzen und Temperaturkonditionierung, was Dioxinund Furanentwicklung verhindert.

Ein anderes Ziel der Erfindung besteht darin, mehr als eine, vorzugsweise zwei Heißabgas-Umgehungsleitungen, vorzusehen, mit geeigneten Schließ-/Öffnungs-Leitungsventileinrichtungen ausgerüstet, zum Verbinden der Hauptauslaßleitung aus dem in Tandemanordnung arbeitenden Lichtbogenelektroofen mit der Vorwärmvorrichtung, wobei die oberen Räume der beiden kombinierten Endverbrennungskammern/divergierende Staubfänger es möglich machen, daß heiße Abgase direkt aus dem Ofen in die endgültigen Verbrennungskammern ausgestoßen werden, wodurch das gesamte Umgehen der Vorwärmvorrichtung erleichtert wird und es möglich wird, daß der Lichtbogenelektroofen unabhängig arbeitet, ohne Durchströmen durch die Schrottvorwärmvorrichtung hindurch.

Ein anderes Ziel der Erfindung besteht darin, einen Schlitz-Typ-Venturi-Skrubber mit Prioritätsfunktion vorzusehen, um sofortiges Schockabkühlen der heißen Abgase zu bewerkstelligen, unter die untere kritische Temperatur der Denovo-Synthese von Dioxinen, und mit der zusätzlichen Funktion, die Gase zu reinigen.

Die Erfindung ist definiert in dem auf die Vorrichtung gerichteten Anspruch 1 und dem auf das verfahren gerichteten Anspruch 18. Die abhangigen Ansprüche enthalten zweckmäßige, weitere Merkmale.

Andere Ziele und Merkmale der vorliegenden Erfindung werden durch die folgende Zusammenfassung der bevorzugten Ausführungsformen der Erfindung und die detaillierte Beschreibung, in Verbindung mit den beigefügten Zeichnungen betrachtet, deutlich werden. Es sei jedoch darauf hingewiesen, daß die Zeichnungen lediglich zu Illustrationszwecken und nicht als Definition der Grenzen der Erfindung eingebracht sind, für welche auf die beigefügten Ansprüche Bezug genommen werden soll.

### Offenbarung der Erfindung

Die Erfindung sieht eine neuartige Vorwärmvorrichtung und -methode zum Vorwärmen einer Eisenschrottmischung vor, und zwar vor dem Zuführen des Schrotts in einen metallurgischen Ofen, hauptsächlich durch die Ausnutzung von Wärme, aus heißen Abgasen rückgewonnen, die aus der Ofenauslaßöffnung emittiert werden, und zur gleichzeitigen Reduzierung von Verseuchungsstoffen aus dem Schrott und aus den Abgasen, mit gleichlaufendem Abwärtsstrom der heißen Abgase und des nach unten fallenden Schrotts. Die Vorrichtung weist eine Kammer, einschließlich einer oberen Abteilung, mit einer Kaltschrotteingabe zum Lagern des kalten Schrotts in der oberen Abteilung, und einen Heißabgaseinlaß, in Strömungsverbindung mit der Ofenauslaßöffnung, auf. Die Kammer weist auch eine untere Abteilung, mit einem Entlademechanismus für den erwärmten Schrott, zum Zuführen des erwärmten Schrotts in den Ofen, und einen Abgasauslaß, in Strömungsverbindung mit einem Vakuumauslaß, zum Evakuieren von verbrauchtem Abgas, auf. Gasdurchlässige Gatter sind zwischen jeder Kammerabteilung angeordnet und arbeiten sequentiell zwischen einer geschlossenen Gatterposition und einer offenen Gatterposition, zum gleichlaufenden Aufnehmen einer durch die Schwerkraft zugeführten Schrottcharge von der Kaltschrotteingabe in einer geschlossenen Gatterposition her, und während einer vorbestimmten Verweildauer wird die Schrottcharge getragen, während heißes Abgas aus dem Heißgaseinlaß in der oberen Abteilung, durch die Schrottcharge hindurch und durch die geschlossenen Gatter hindurch, nach unten strömt und aus dem Abgasauslaß in die untere Abteilung strömt. Die Gatter vermischen den Schrott, wenn er fällt, und dienen dazu, die Gravitationsabwärtsbewegung der Schrottcharge von der oberen Abteilung nach der unteren Abteilung hin zu steuern, nach Ablauf der Verweildauer.

In Betrieb führt die Vorrichtung ein Verfahren durch zum Vorwärmen einer Eisenschrottmischung, vor dem Zuführen des Schrotts in einen metallurgischen Ofen hinein, hauptsächlich unter Ausnutzung von Wärme, aus heißen Abgasen rückgewonnen, die aus der Ofenauslaßöffnung emittiert werden, und zum gleichzeitigen Reduzieren von Verseuchungsstoffen aus dem Schrott und aus den Abgasen, mit gleichlaufender Abwärtsströmung der heißen Abgase und Abwärtsbewegung des Schrotts, wie folgt: Eine Charge Kaltschrott wird auf einem gasdurchlässigen, geschlossenen Gatter innerhalb einer oberen Abteilung einer Kammer deponiert, wobei die obere Abteilung einen Heißabgaseinlaß in Strömungsverbindung mit der Ofenauslaßöffnung einschließt. Der Schrott wird auf dem geschlossenen Gatter für eine vorbestimmte Verweildauer gelagert, während heißes Abgas aus dem Heißgaseinlaß in der oberen Abteilung nach unten strömt, durch die Schrottcharge hindurch und durch das geschlossene Gatter hindurch dringt und aus einem Abgasauslaß in einer unteren Abteilung der Kammer herausströmt. Durch Öffnen der Gatter wird die Gravitationsabwärtsbewegung des Schrotts gesteuert, was eine Schrottbewegung aus der oberen Abteilung nach der unteren Abteilung hin ermöglicht, nach Ablauf der Verweildauer. Danach wird der erwärmte Schrott aus der unteren Abteilung dem Ofen zwangszugeführt. Sukzessive diskrete Schrottchargen werden dadurch vorgewärmt, daß die obigen Schritte in sequentiell abgestufter Weise wiederholt werden.

Dementsprechend, um die Nachteile und Mängel der Schrottvorwärmeinrichtungen und -verfahren des Stands der Technik zu überwinden, ist die Schrottvorwärmung gemäß der Erfindung in einem unabhängigen und autonomen, separaten, selbständigen, selbstladenden und selbstentladenden, einfach und robust in der Konstruktion, nahezu wartungsfreien Schrottvorwärmvorrichtungs- und -prozeßsystem durchzuführen, angrenzend an den abgedichteten, metallurgischen Lichtbogenelektroofen. Die Vorwärmvorrichtungsstruktur könnte ökonomisch und ohne große Modifikationen an eine vorhandene oder neue Lichtbogenelektroofen-Schmelzfazilität angefügt werden. Durch Tandembetrieb mit einem versiegelten, metallurgischen Lichtbogenelektroofen wird die hohe Energieeffizienz und Betriebsleistung des Schrottvorwärmvorrichtungs- und Geschlossenkreis-Prozeßsystems gemäß dem Gegenstand der Erfindung den Stahlerzeugungsprozeß wesentlich beeinflussen.

Zusätzlich ist ein besonders wichtiger Vorzug die signifikante Verminderung des Volumens der verunreinigenden, toxischen Gase und Substanzen. Das Schrottvorwärmvorrichtungs- und Geschlossenkreis-Prozeßsystem gemäß dem Gegenstand der Erfindung wird zur Reduzierung des Verbrauchs elektrischer und anderer Energien, einer Reduzierung des Elektrodenverbrauchs und einer Verkürzung der Abstich-zu-Abstich-Zeit beitragen, mit verbesserter Sicherheit und Arbeitsumgebung, was im Ganzen auf eine verbesserte Gesamtleistung und Profitabilität hinausläuft.

Wenn man den Betrieb eines herkömmlichen, derzeitigen Stahlerzeugungs-Lichtbogenelektroofens, mit von oben chargierter Kalteisenschrottmischung durch eine oder mehrere Chargierkübelbeladungen, in Betracht zieht, hängt der Betrag der Prozeßgase, die aus dem Ofen ausströmen oder entweichen, von mehreren Faktoren ab, und zwar: Zusammensetzung der Charge, Quantität und Qualität des verwendeten Kalks und anderer Zuschläge, Betrag der Gase, die durch die Oxy-Fuel-Brenner erzeugt werden, Quantität des Kohlenstoffs und des Sauerstoffs, zum Aufschäumen der Schlacke etc. eingeführt, und, was von größter Wichtigkeit ist, von der Menge der umgebenden Kaltluft, die in den Ofen gelangt. Ohne Versiegelung und Gasabdichtung des Ofenbehältnisses, so viel wie praktisch möglich, selbst bei einer sogenannten Direktevakuierung über ein viertes Loch in dem Dach, könnte der Betrag der ausgestoßenen Gase 350-450 m³/tonne erzeugter Stahl erreichen. Bei Nichtvorhandensein von Kaltlufteindringung, was durch gasdichtes Versiegeln des Ofens erreicht wird, und ohne Verwendung einer Gasform-Sauerstoff-Entkohlungslanze, sinkt der Betrag der heißen Abgase, die über das vierte Loch ausgestoßen werden, auf einen Bereich von 90-120 m³/tonne erzeugter Stahl. Mit der Verwendung einer entkohlenden Sauerstofflanze erhöht sich der Betrag der Gase, die ausgestoßen werden, proportional zu dem Betrag des eingegebenen entkohlenden Sauerstoffs auf einen Bereich von 200-220 m³/ton erzeugter Stahl.

Ferner enthalten die ausgestoßenen heißen Abgase signifikante Beträge an gefährlichen Nebenprodukten. Ein Beispiel einiger Verunreinigungen in den heißen Abgasen, die über ein viertes Loch ausgestoßen werden, wenn Luft in das Ofenbehältnis eindringt, ist in der Tabelle I dargestellt. Die sehr hohe Temperatur, die den Lichtbogen umgibt, und die hohen Temperaturen in dem Ofenbehältnis im allgemeinen bringen die Bildung großer Beträge an Kohlenmonoxiden sowie die folgenden Mikronebenprodukte mit sich: Stickstoff- und Schwefeloxide, Cyanide, Fluoride, Dioxine und Furane. Die Konzentration von Stickstoffoxiden und Cyaniden hängt hauptsächlich von der Menge des Stickstoffs ab, die mit der Kaltluft in den Ofen gelangt, von der Leistung der Lichtbögen und von dem Grad der Dissoziation des molekularen Stickstoffs innerhalb des Ofens. Der Betrag der Schwefeloxide in den Gasen ist gewöhnlich nicht sehr hoch. Die Konzentration der Fluoride in den Gasen ist auch gering, und sie ist direkt bezogen auf den Gehalt von Fluorit bzw. Flußspat in der Schlacke. Der Gehalt an Dioxinen und Furanen wird durch die Quantität der brennbaren Verseuchungsstoffe, die in dem chargierten Schrott eingeschlossen sind, bestimmt, deren Erzeugung und Vernichtung durch die Temperatur der Abgase gesteuert wird.

**Tabelle I.**

| Gehalt der gefährlichen, gasförmigen Produkte in den aus dem Lichtbogenelektroofen ausgestoßenen heißen Abgasen | | |
|---|---|---|
| Gefährliche Substanzen | Durchschnittliche Konzentration mg/m³ | Betrag der ausgestoßenen Nebenprodukte, g/tonne erzeugter Stahl |
| Kohlenmonoxide | 13.500,0 | 1.350,0 |
| Stickstoffoxide | 550,0 | 270,0 |
| Schwefeloxide | 5,0 | 1,6 |
| Cyanide | 60,0 | 28,4 |
| Fluoride | 1,2 | 0,56 |

Was den Staub betrifft, der mit den Gasen aus dem Ofen ausgestoßen wird, besteht die Hauptmasse davon, bis zu 60-70 %, aus Partikeln, die kleiner sind als 3 Mikrometer in Querrichtung. Der während einer Schmelze, mit dem Eindringen von Luft in den Ofen, hervorgerufene Staub enthält einen hohen Betrag an "Ferroxid" Fe₂O₃.

Wenn man den derzeitigen Stand der Verseuchung der Umwelt im allgemeinen in Betracht zieht, ist es lebenswichtig, die Erzeugung gefährlicher Produkte, primär durch industrielle Prozesse als Ganzes, auf ein erreichbares Minimum zu reduzieren. Jedoch muß diese Aufgabe durch die Mittel, die für die Industrie akzeptabel sind, erreicht werden. Eine Reduzierung der Erzeugung von Verunreinigungssubstanzen durch industrielle Herstellungsprozesse muß durch technologische Umgestaltung mit ökonomischer Ausrichtung durchgeführt werden, so daß deren Implementation zwangsläufig auch zu ökonomischen Vorteilen führt, durch sicherere und verbesserte Arbeitskonditionen ergänzt.

Zusammengefaßt, das Vorrichtungs- und Prozeßsystem, mit gleichlaufendem Abwärtsstrom des Schrotts und der heißen Gase, zum stufenweisen Vorwärmen des Stahlschrotts für einen metallurgischen Schmelzofen gemäß dem Gegenstand der Erfindung umfaßt eine Mehrzahl größerer und kleinerer funktioneller und das Prozeßsystem betätigender Charakteristiken und Parameter, harmonisch zu einer Ausführungsform zusammengefaßt, die diesem verleiht:
- Die Fähigkeit, das gesamte Schrottvorwärmvorrichtungsund Prozeßsystem einer Majorität von Lichtbogenelektroöfen in vorhandenen Stahlwerken hinzuzufügen, mit kurzfristigem Ertrag der Investierungszeit;
- Die Fähigkeit, in einer synchronisierten Tandemart mit den meisten der vorhandenen metallurgischen Schmelzöfen, vorzugsweise mit einem gasdichten, versiegelten Lichtbogenelektroofen zum Stahlerzeugen aus einer Kalteisenschrottmischung, zu arbeiten;
- Die Fähigkeit, den Betrag der heißen Gase, die aus dem Lichtbogenelektroofen ausgestoßen werden, signifikant zu reduzieren, durch vollständiges Eliminieren der Oxy-Fuel-Brenner und des sogenannten Prozesses der "Nachverbrennung" aus dem Ofenbehältnis;
- Die Fähigkeit, die Energieeffizienz zu verbessern durch Betreiben einer Schrottvorwärmvorrichtung in tandem mit einem Lichtbogenelektroofen und durch Eliminieren der energieineffizienten Oxy-Fuel-Brenner aus dem Ofenmantelbehältnis und Neuanordnen derselben in der Schrottvorwärmvorrichtung;
- Die Fähigkeit, die Energieeffizienz zu verbessern durch Eliminieren der sogenannten "Nachverbrennung" in dem Lichtbogenelektroofenbehältnis und durch Verwerten der Eigenwärme- und chemischen thermischen Energie, in den heißen Abgasen enthalten, die aus dem Lichtbogenelektroofen ausgestoßen werden, in den Abteilungen der Vorwärmvorrichtung, mit nahezu doppelter Effizienz der Wärmeübertragung von den Gasen auf den Schrott;
- Die Fähigkeit, die Energieeffizienz zu verbessern durch Eliminieren der Notwendigkeit, das Dach des Lichtbogenelektroofens jedesmal zu entfernen, wenn eine Charge Schrott via Laufkran mit einem konventionellen Chargierkübel in den Ofen zu befördern ist;
- Die Fähigkeit, die Notwendigkeit der Chargierlaufkrane und der klassischen Chargierkübel zu eliminieren, wegen der selbstchargierenden Befähigung, über einen integrierten, semikontinuierlichen, selbstchargierenden Schrottbehälter-Hebemechanismus;
- Die Fähigkeit, den Schrottbehälter des integrierten, semikontinuierlichen Schrottbehälter-Hebemechanismus durch herkömmliche, niedrig angeordnete, schrottbewegende Horizontalförderer oder Straßentransport-Schrotthandhabungseinrichtungen, vorzugsweise auf einem niedrigen Bodenniveau, nachzufüllen;
- Die Fähigkeit, eine Kalteisenschrottmischung, in die obere Abteilung der Vorrichtung semikontinuierlich chargiert, auf die vorbestimmte Temperatur bei ihrer Entladung aus der unteren Abteilung effizient vorzuwärmen, einschließlich der höchstmöglichen Verbrennung aller verbrennbaren Verseuchungsstoffe, die in die Vorrichtung eingebracht werden, und welche geeignete Saugwirkungen an unterschiedlichen Punkten der Vorrichtung vorsieht und, höchst wichtig, forcierte Kombination jedweder Gase, die in die vertikale Hauptkammer eintreten, um von dem höchsten Punkt der oberen Abteilung abwärts durch den Schrott hindurch in einer Strömungsrichtung gleichlaufend mit der Bewegungsrichtung des sich durch die Schwerkraft nach unten bewegenden Schrotts zu strömen, wobei kombinierte heiße Gase umschließen: die anfänglichen heißen Abgase aus dem metallurgischen Lichtbogenelektroofen, rückgewinnbare heiße Gase aus der Endpunkt-Nachverbrennungskammer, heiße Gase, durch die Oxy-Fuel-Brenner erzeugt, in den Wänden der Abteilungen angeordnet, wie auch heiße Gase, die aus der Oxidation der verbrennbaren Substanzen, die in der Charge enthalten sind, resultieren, über beigegebenen Sauerstoff, sauerstoffangereicherte Luft oder Luft;
- Die Fähigkeit, eine Eisenschrottmischung auf die gewünschte nominale Vorwärmtemperatur vorzuwärmen, ohne heiße Abgase aus dem angrenzenden, in Tandemanordnung arbeitenden Lichtbogenelektroofen, nur durch Verwendung von Oxy-Fuel-Brennern der Vorwärmvorrichtung, und Zwangszuführung des vorgewärmten Schrotts in das Ofenbehältnis mit einer anfänglichen erhöhten Rate, vor dem "Kaltstart" des Ofens, und dadurch schnelles Erreichen der normalen "Flachbad"-Betriebskonditionen, durch sofortiges Vorsehen des Schmelzkraters des geschmolzenen Metalls unter der Elektrode bzw. den Elektroden, insbesondere wenn mit Oxy-Fuel/Sauerstofflanze und frühzeitiger Bildung schaumiger Schlacke gesteigert;
- Die Fähigkeit, den Oxidationsverlust der Schlacke durch gesteuertes, graduelles, stufenweises Vorwärmen der Eisenschlackenmischung mit Zwischentemperatur- und Gaszusammensetzungskonditionierung über realzeitgesteuerte Oxy-Fuel-Brenner-Leistungseingabe und die Einführung von Oxidationsmitteln zu reduzieren;
- Die Fähigkeit, die semikontinuierliche Gravitationsabwärtsbewegung der Eisenschrottmischung über einen einfachen und robusten, adäquat gekühlten Schrottabwärtsbewegungssteuerungsmechanismus zu steuern;
- Die Fähigkeit, die vorgewärmte Eisenschrottmischung von dem konvergierenden Boden der Kammer zuverlässig in den hitzebeständigen Förderwagentrog zu entladen, zur erzwungenen Beförderung in den Ofen, einschließlich Wiegen, mit der erforderlichen Genauigkeit, jeder zwangszugeführten Menge Schrott;
- Die Fähigkeit, eine vorgewärmte Eisenschrottmischung aus der Vorwärmvorrichtung in den angrenzenden, in Tandemanordnung arbeitenden Lichtbogenelektroofen semikontinuierlich zwangszufördern, mit der Rate der Schmelzbefähigung des Ofens, wodurch ein Ofenbetrieb mit unaufhörlichem Heißmetallbad möglich wird, wobei die Lichtbögen in schaumige Schlacke von geeigneter Tiefe, Konsistenz und chemischer Beschaffenheit permanent eingetaucht sind, sowie als Folge hoher thermischer Effizienz ein rasches Schmelzen/Auflösen des in das Heißmetallbad eingetauchten Schrotts;
- Die Fähigkeit, den angrenzenden, in Tandemanordnung arbeitenden versiegelten, metallurgischen Lichtbogenelektroofen mit einem Heißmetallbad kontinuierlich zu betreiben, infolge semikontinuierlicher, erzwungener Lieferung einer vorgewärmten, präparierten, vernünftig bemessenen Eisenschrottmischung in das Ofenbehältnis, mit einer Rate, gemäß der Schmelzbefähigung des Ofens.

-- Verglichen mit dem traditionellen Ofenbetrieb, unter Verwendung von kaltem Schrott, bringen die oben aufgeführten Fähigkeiten gemäß dem Gegenstand der Erfindung wesentliche Verbesserungen der folgenden technischen Parameter und ökonomischen Faktoren mit sich:

-- Reduzierung der elektrischen Leistungseingabe und der Ofentransformatorkapazität in dem Bereich von 30-35 %;
-- Reduzierung des elektrischen Energieverbrauchs in dem Bereich von 25-35 %;
-- Reduzierung des Elektrodenverbrauchs in dem Bereich von 15-20 %;
-- Reduzierung der ausgestoßenen Abgase in dem Bereich von 40-45 %;
-- Reduzierung der Erzeugung von Staub und von gefährlichen Substanzen in dem Bereich von 20-25 %;
-- Reduzierung der Dioxine und Furane unter die derzeit zugelassenen Grenzen;
-- Reduzierung des Spannungsflackerns unter die zugelassenen zu beachtenden Grenzen;
-- Mögliche Eliminierung der elektrischen Hochspannungsausgleichsvorrichtung bei optimierter Impedanz des Ofens;
-- Verkürzung der Abstich-zu-Abstich-Zeit in dem Bereich von 15-20 %;
-- Mögliche Verkleinerung der Luftfilterungs-Baghouse-Kapazität bzw. Filterhaus-Kapazität in dem Bereich von 25-30 %;
-- Reduzierte Wartungserfordernisse infolge drastischer Reduzierung des Kurzschluß- und schwankenden Leistungseingabe-Charakters des Betriebs;
-- Verbesserte Sicherheits- und Arbeitsumgebungskonditionen hauptsächlich infolge des semikontinuierlichen und halbautomatischen Beschickens des Ofens mit vorgewärmtem Schrott, wodurch das Explosionsrisiko bei dem gefährlichen Einschütten von nassem Schrott mittels eines konventionellen Chargierkübels in den offenen Ofen eliminiert wird und auch der Lärmbelästigungspegel wirksam gesenkt wird.

Weitere Einzelheiten der Erfindung und ihre Vorteile werden aus der detaillierten Beschreibung und den Zeichnungen, nachfolgend eingeschlossen, deutlich.

### Kurze Beschreibung der Zeichnungen

Damit die Erfindung ohne weiteres verständlich wird, wird eine bevorzugte Ausführungsform der Erfindung anhand eines Beispiels, unter Bezugnahme auf die beigefügten Zeichnungen, beschrieben, und zwar zeigt
Fig. 1 einen vertikalen, longitudinalen, linksseitigen Schnitt nach der Linie IV - IV in Fig. 2 der Schrottvorwärmvorrichtung und des in Tandemanordnung arbeitenden, angrenzenden Lichtbogenelektroofens.
Fig. 2 einen vertikalen, seitlichen, rechtsseitigen Aufriß nach der Linie II - II der Fig. 1 der Schrottvorwärmvorrichtung.
Fig. 3 einen vertikalen, seitlichen Schnitt nach der Linie III - III in Fig. 1.
Fig. 4 eine horizontale Schnittansicht der zwei Eisenrosthälften des Schrottgravitationsabwärtsbewegungssteuerungsmechanismus auf der Ebene nach der Linie I - I der Fig. 2.
Die Figuren 5a, 5b, 5c, 5d, 5e und 5f zeigen progressive, vertikale Schnitte nach der Linie V - V in Fig. 4, welche den Fortschritt der Schrottabwärtsbewegung und den Abwärtsbewegungssteuerungsmechanismus mit seinen rotierenden, zurückziehenden und verlängernden funktionellen Bewegungen, erkennen lassen.
Fig. 6 zeigt ein vergrößertes Vertikalschnitt-Detail des in Fig. 1 dargestellten Schrottbehälters, in seiner oberen Entladeposition, wobei der abdichtende Verschluß der oberen Abteilung der Hauptvorwärmkammer offen ist.

### Detaillierte Beschreibung der bevorzugten Ausführungsformen

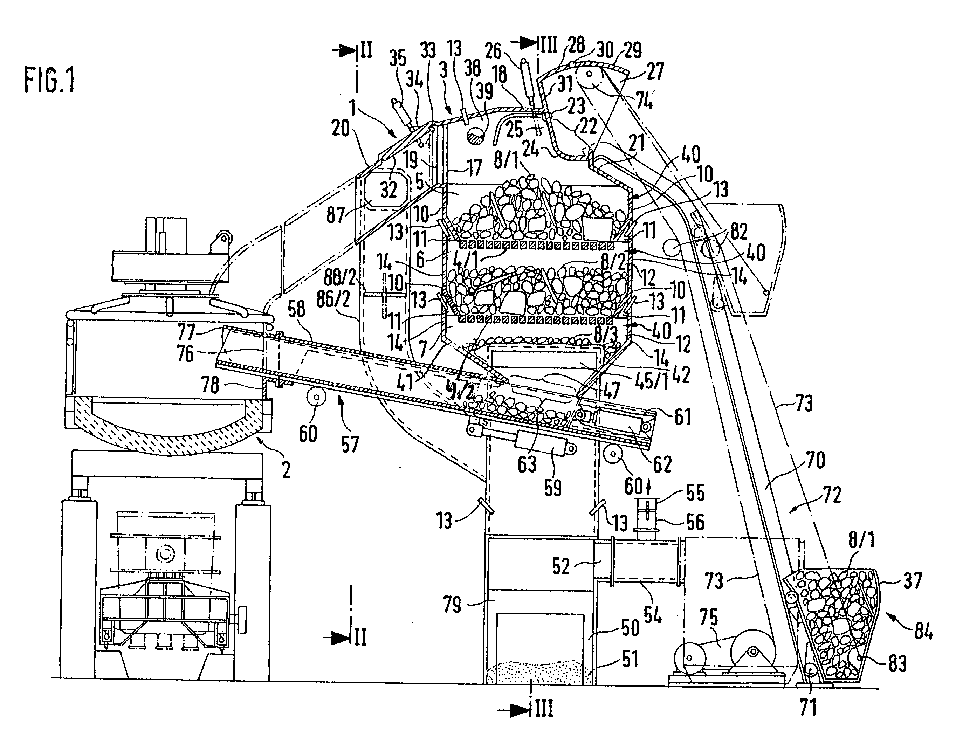

Das Schrottvorwärmvorrichtungs- und Prozeßsystem der in Fig. 1 und in den anderen Zeichnungen dargestellten bevorzugten Ausführungsform schließt die zwei funktionell untereinander verbundenen Komponenten ein: die Schrottvorwärmvorrichtung 1 und ein angrenzender, in Tandemanordnung arbeitender Lichtbogenelektroofen 2. Die in Fig. 1 dargestellte autonome Schrottvorwärmvorrichtung 1 besteht aus den drei größeren strukturellen und funktionellen Bauteilgruppen: der vertikalen Hauptvorwärmkammer 3, der den schrägen Schrottbehälter 37 hebenden, selbstchargierenden Einrichtungsbauteilgruppe 72 und dem schrägen die Eisenschrottmischung 8 chargierenden Mechanismus 57, zum Übertragen der vorgewärmten Eisenschrottmischung 8 von der konvergierenden unteren Abteilung 7 der vertikalen Hauptvorwärmkammer 3 her und zum Zwangszuführen der Eisenschrottmischung 8 in den angrenzenden Lichtbogenelektroofen 2.

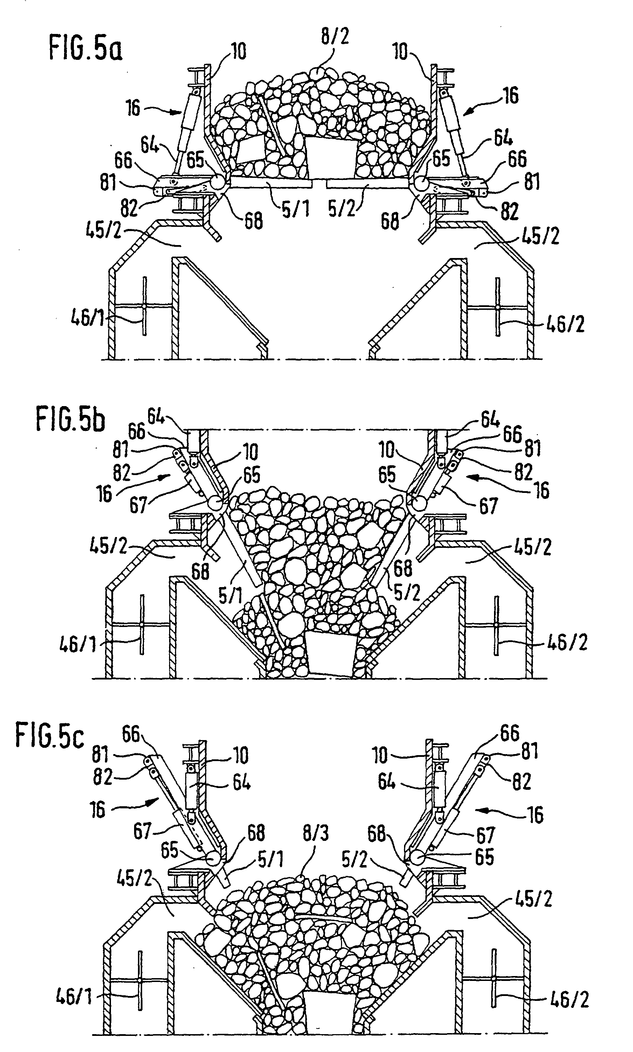

Die größere Komponente der Schrottvorwärmvorrichtung 1 ist die vertikale Hauptvorwärmkammer 3, unterteilt durch die zwei Satz Schrottabwärtsbewegungssteuerungseisenroste 4 in drei Abteilungen, nämlich die obere Abteilung 5, die mittlere Abteilung 6 und die untere Abteilung 7. Jede dieser drei Abteilungen 5, 6 und 7 hat eine spezifische Aufgabe und einen spezifischen Zweck, die effizienteste, gesteuerte, graduelle Temperaturerhöhung der kalten Eisenschrottmischung 8 sicherzustellen. Die Mischung 8 wird in die Schrottvorwärmvorrichtung 1 eingeführt und bewegt sich semikontinuierlich durch Schwerkraft nach unten, in Aufeinanderfolge, durch die gesteuerte Schwenk- und Zurückziehungsbewegung der Eisenroste 4, wie in den Fig. 5a-5f angedeutet.

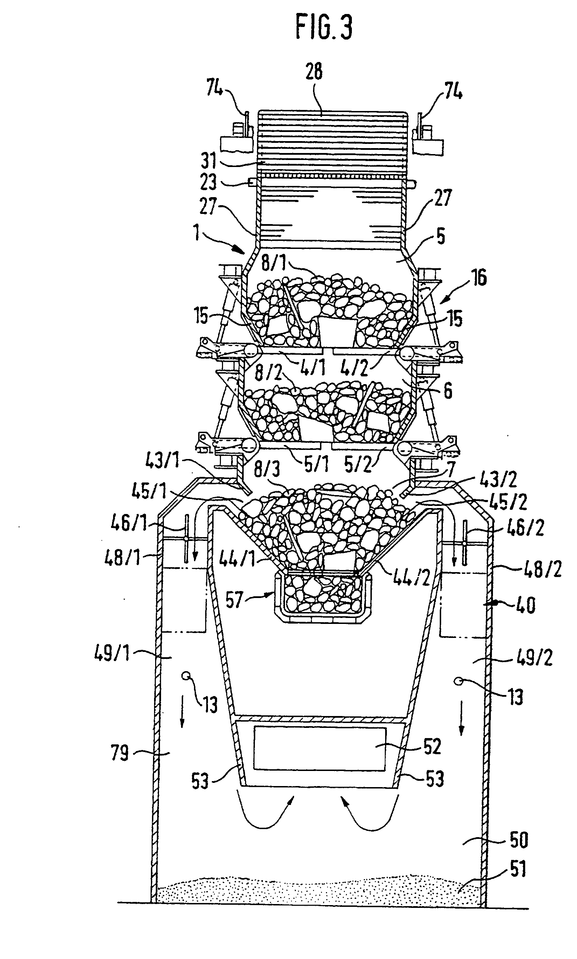

Die gesamte vertikale Hauptkammer 3 der Vorwärmvorrichtung 1 sowie der Innenraum 38 der oberen Abteilung 5, Fig. 1, ist dazu bestimmt, gegen die umgebende Atmosphäre abgedichtet zu werden, und zu diesem Zweck besteht ihre umschließende Struktur aus gasdichten, wassergekühlten Wandungen. Bei dem kürzeren unteren Wandteilstück 10 der rechteckigen Abteilungen sind die unteren Enden nach innen umgebogen, wo sie mit den Eisenrosten 4 zusammenkommen, um kratzenartige Führungen vorzusehen, zur besseren Abwärtsbewegungssteuerung des Schrotts 8, wenn die Eisenroste 4 geschwenkt und gesenkt werden. Gleichzeitig bilden die Hohlräume 11 hinter den nach innen umgebogenen unteren Enden des kürzeren Wandteilstücks 10, zusammen mit dem freien Raum 12 zwischen dem Schrott 8 in der mittleren Abteilung 6 und den Böden der Eisenroste 4, ausreichend Raum zum Vermischen und Verbrennen der Gase, die von der oberen Abteilung 5 her durch die Eisenroste 4 hindurchdringen, und der Gase von den Oxy-Fuel-Brennern 13, die in den hitzebeständig ausgekleideten Wänden 14 installiert sind, die den Raum der mittleren Abteilung 6 gasdicht umschließen. Die unteren Enden des längeren unteren Wandteilstücks 15, in Fig. 3 dargestellt, der oberen Abteilung 5 sind auch nach innen umgebogen, zur besseren Führung des Schrotts 8 und zur Unterbringung der hydraulischen, zylinderbetätigten Hebelmechanismen 16, in Fig. 3 dargestellt, zum Steuern der Bewegungen der kammartigen Eisenroste 4.

Eine an den Ofen angrenzende kürzere, obere Wand 17, Fig. 1, der oberen Abteilung 5 erstreckt sich vertikal, bis sie auf das im allgemeinen horizontale Verschließpaneel 18 trifft. Für den Eintritt der heißen Abgase aus dem Lichtbogenelektroofen 2, durch den quadratischen, wassergekühlten Kanal 20, in die obere Abteilung 5, ist die kürzere, obere Wand 17 mit einer quadratischen Öffnung 19 ausgerüstet. Um zu verhindern, daß heiße Abgase aus dem Lichtbogenelektroofen in die obere Abteilung 5 gelangen, durch die quadratische Öffnung 19, ist der wassergekühlte Kanal 20 mit einer wassergekühlten, quadratischen Tür 32 ausgerüstet, die fähig ist, um den wassergekühlten Schacht 33 herum zu rotieren, durch Hebelmechanismen 34 und einen hydraulischen Zylinder 35 gesteuert. Die kürzere, obere Wand 21 der oberen Abteilung 5 konvergiert nach oben auf die Mitte zu, und endet an dem Boden der quadratischen Öffnung 22, die einen Einlaß für den Schrottbehälter 37 vorsieht, während des semikontinuierlichen Chargierens des Schrotts in den Raum der oberen Abteilung 5. Das obere Ende der quadratischen Chargieröffnung 22 wird durch den wassergekühlten Schacht 23 gebildet, mit dem ein in der Projektion gebogener und quadratischer, wassergekühlter, versiegelnder Verschluß 24 verbunden ist. Die Funktionsweise des versiegelnden Verschlusses 24 wird durch die Hebelmechanismen 25 und die Hydraulikzylinder 26 gesteuert.

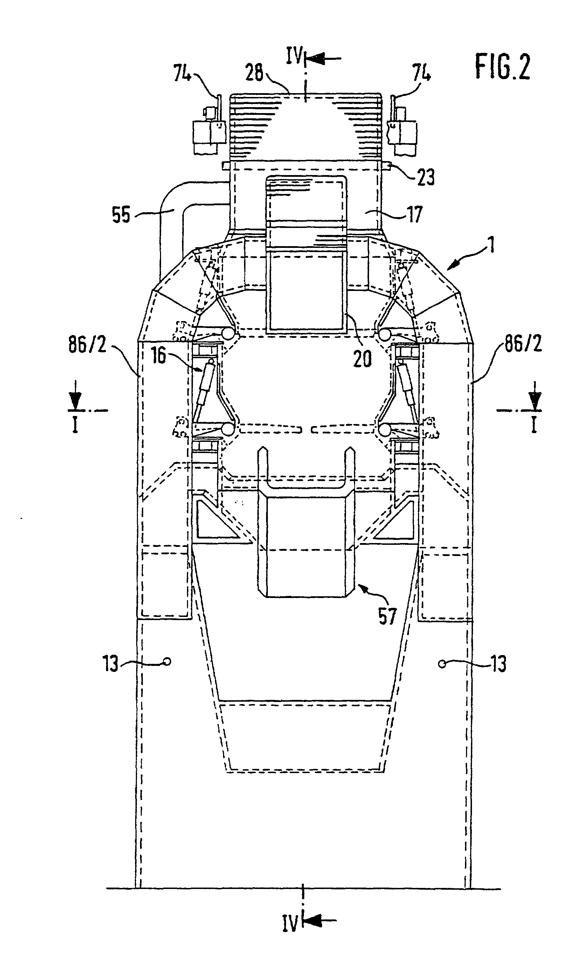

Die längeren oberen Wände 27, Fig. 2, der oberen Abteilung 5 konvergieren von der Verbindungsleitung mit den längeren, unteren Enden 15 zuerst nach innen, nach der Mitte hin, und dann verlaufen sie vertikal, wobei sie die vertikalen Seiten der quadratischen Chargieröffnung 22 bilden. Die Gestalt der längeren, oberen Wände 27 in ihrem oberen Teilstück hat eine gekrümmte Gebläseflügelform. Die gekrümmte Form der vertikalen, längeren, oberen Wände 27 ist teilweise verbunden mit dem gebogenen, im allgemeinen horizontalen Paneel 28. Das restliche Teilstück der gekrümmten Form zwischen den vertikalen, längeren, oberen Wänden 27 ist durch ein gebogenes, im allgemeinen horizontales Paneel 29 abgedeckt, das fähig ist, um den horizontal ausgerichteten, wassergekühlten Schacht 30, Fig. 1, herum zu rotieren. Die Länge des gebogenen Paneels 29 wird durch die Position des teilweise rotierten Schrottbehälters 37 bestimmt, so daß die obere quadratische Profilleiste des teilweise rotierten Schrottbehälters 37 unter dem Ende des gebogenen Paneels 29 sein muß, und zwar vor dem Beginn der Entladung der Eisenschrottmischung 8 aus dem teilweise rotierten Schrottbehälter 37. Auf diese Weise bestimmt die Länge des gebogenen Paneels 29 auch die Position der schräg endenden Leiste der längeren, oberen Wände 27.

Das im allgemeinen vertikale Wandpaneel 31, Fig. 1, Fig. 3 und Fig. 6, schließt den Hohlraum zwischen den vertikalen, längeren, oberen Wänden 27, näher an dem mittleren Ende des permanenten und gebogenen Paneels 29, und dem horizontal ausgerichteten, wassergekühlten Schacht 23. Die oben beschriebene Anordnung des versiegelten, gasdichten, strukturellen Verschlusses der oberen Abteilung 5 sieht gleichzeitig einen Hohlraum vor zum zeitweiligen Versiegeln zwischen den Seiten des chargierenden Schrottbehälters 37 und den vertikalen, längeren, oberen Wänden 27 sowie zwischen dem rotierenden Schrottbehälter 37 und dem gebogenen Paneel 29 während des Chargierens der kalten Eisenschrottmischung 8 in die Vorwärmvorrichtung 1 über den Chargierbehälter 37.

Einer der spezifischen Zwecke der oberen Abteilung 5 der vertikalen Hauptvorwärmkammer 3 besteht darin, auf den kammartigen Eisenrosten 4 eine geeignete Menge der Eisenschrottmischung 8 anfänglich aufzunehmen und zu kompilieren, die erforderlich ist, um ihre anfängliche, gewünschte Temperatur während der zugeteilten Verweilzeit zu erreichen. Die kalte Eisenschrottmischung 8 wird semikontinuierlich zugeführt, in einer oder mehreren schnellen, sich wiederholenden Bewegungen des chargierenden Schrottbehälters 37 in die obere Abteilung 5 durch die Öffnung 22, die normalerweise durch den abdichtenden Verschluß 24 verschlossen ist. Das Eindringen einer großen Menge von unerwünschter Falschluft während des Chargierens der kalten Eisenschrottmischung 8/1 aus dem chargierenden Schrottbehälter 37 in die obere Abteilung 5 durch die Öffnung 22 wird verhindert, weil das Öffnen und Schließen des abdichtenden Verschlusses 24 mit der abgedichteten Position des chargierenden Schrottbehälters 37 während seiner Entleerung synchronisiert ist.

Eine andere spezifische Aufgabe und ein anderer spezifischer Zweck der oberen Abteilung 5 besteht darin, ein einwandfreies und zuverlässiges Vermischen der heißen Abgase aus dem Lichtbogenelektroofen 2, die durch die Öffnung 19 in den freien Raum 38 über dem Eisenschrott 8 zugeführt werden, zu ermöglichen und sicherzustellen. Rückgewinnbare, heiße Gasen aus der endgültigen Nachverbrennungskammer 79 werden auch über den Kanal 54 und 55 in den freien Raum 38 der oberen Abteilung 5, durch die Öffnung 39, zugeführt, zur geeigneten Verbrennung des entstandenen Gemisches aller vorhandenen Gase. Dies wird erreicht durch standardisierte, Oxy-Fuel-Brenner 13 mit variablem Brennstoff-Sauerstoff-Verhältnis, durch ein Realzeitelektronikregulierungssystem gesteuert, auf Informationen von Gasanalyse-, Druck- und Temperatursensoren 40 her beruhend. Nach Erreichen der erforderlichen Temperatur des resultierenden, endgültigen Gasgemisches durch deren vorbestimmte, teilweise Verbrennung in einem adäquaten Verhältnis werden die temperaturkonditionierten Gase in eine gleichlaufende Abwärtsströmung gezwungen durch die kompilierte Menge der Eisenschrottmischung 8/1 hindurch, die auf den durchlässigen Eisenrosten 4 liegt. Infolge des optimalen Verhältnisses der Fläche und der Tiefe der Menge der Eisenschrottmischung 8 dringen die heißen Gase mit der günstigsten Geschwindigkeit und mit hervorragender Wärmeübertragungseffizienz durch die Eisenschrottmischung 8 hindurch.

Schließlich besteht ein anderer spezifischer Zweck und eine andere spezifische Aufgabe der oberen Abteilung 5 darin, durch Schwerkraft, und in einem einzigen einfachen Vorgang, mit einem bestimmten Vermischungsgrad, aber ohne Aufschlag, die gesamte kompilierte Menge Eisenschrottmischung 8, während der zugeteilten Verweilzeit teilweise vorgewärmt, in die zuvor geleerte mittlere Abteilung 6 zu befördern, durch die Freigabebetätigung der Eisenroste 4.

Die spezifischen Zwecke und Aufgaben der mittleren Abteilung 6 der vertikalen Hauptvorwärmkammer 3 sind den Zwecken und Aufgaben der oberen Abteilung 5 ähnlich. Die Hauptaufgabe und der Hauptzweck der mittleren Abteilung 6 besteht darin, auf ihren Eisenrosten 4 die gesamte Menge der bereits teilweise erhitzten Eisenschrottmischung 8, die durch Schwerkraft von der oberen Abteilung 5 her übertragen wird, aufzunehmen und sicher zu halten bzw. warmzuhalten, wenn die Eisenroste 4 von ihrer horizontalen Position unter der Eisenschrottmischung 8 bewegt werden. Der nächste Zweck der mittleren Abteilung 6 besteht darin, zusätzliche, adäquate, teilweise Verbrennung des Gasgemisches zu ermöglichen und sicherzustellen, das durch die Eisenroste 4 hindurch in die freien Räume 11 und 12 über der Eisenschrottmischung 8 austritt, wobei seine Temperatur zuvor erhöht wurde, durch den Betrieb der Brenner 13 und durch Ofenabgase. Normalerweise enthält das Gasgemisch, das durch die Eisenroste 4 hindurchströmt, signifikante Mengen von gasförmigen, brennbaren Bestandteilen, die hauptsächlich aus den brennbaren, kontaminierenden Verunreinigungen, die in der Eisenschrottmischung 8 eingeschlossen sind, herrühren und die hohen Temperaturen ausgesetzt waren, ohne das Vorhandensein eines ausreichenden Oxidationsmittels während der vorherigen Erwärmungsstufe in der oberen Abteilung 5. Ebenfalls während der vorherigen Erwärmungsstufe in der oberen Abteilung 5 haben die Gase mit anfänglich höherer Temperatur, wenn sie durch die Eisenschrottmischung 8 nach unten strömen, einen bestimmten Betrag ihrer thermischen Energie auf die Eisenschrottmischung 8 übertragen, und daher müssen sie auch temperaturkonditioniert werden. Um die erforderliche zusätzliche und adäquate teilweise Verbrennung des Gasgemisches zu erreichen, das durch die Eisenroste 4 in die freien Räume 11 und 12 über der Eisenschrottmischung 8 in der mittleren Abteilung 6 hindurch strömt, bei gleichzeitiger Erhöhung der Temperatur der Gase, werden standardisierte Oxy-Fuel-Brenner 13 mit variablem Brennstoff/Sauerstoff-Verhältnis in der gleiche Weise wie in der oberen Abteilung 5 verwendet. Die standardisierten Brenner 13 werden in der gleichen Weise wie in der oberen Abteilung 5 gesteuert. Die gleichlaufende Abwärtsströmung der wiedererhitzten Gase durch die Eisenschrottmischung 8 in der mittleren Abteilung 6 hindurch sowie die Wärmeübertragungseffizienz sind die gleichen wie in der oberen Abteilung 5. Die Eisenschrottmischung 8, die in der mittleren Abteilung 6 auf eine weiter erhöhte Temperatur während der zugeteilten Verweilzeit vorgewärmt wird, wird durch Schwerkraft in die zuvor geleerte untere Abteilung 7 befördert, durch die Freigabebetätigung der Eisenroste 4.

Die untere Abteilung 7 der vertikalen Hauptvorwärmkammer 3 hat eine ähnliche Funktion wie jene der oberen Abteilung 5 und der mittleren Abteilung 6. Die Hauptaufgabe der unteren Abteilung 7 besteht darin, in ihrem umgekehrten pyramidischen Hohlraum, oder konvergierenden Boden, die gesamte Menge der stark vorgewärmten Eisenschrottmischung 8, durch Schwerkraft von der mittleren Abteilung 6 her übertragen, aufzunehmen und sicher zu halten bzw. zuverlässig warmzuhalten. Die konvergierende, pyramidische Form der unteren Abteilung 7 ist aus feuerfest ausgekleideten Wänden 14 und wassergekühlten, gestalteten Segmenten 41; 42; 43 und 44 vorgesehen, wobei alle von diesen an ihrem Boden eine rechteckige Öffnung 47 bewirken. Die Öffnung 47 dient zum Entladen der auf eine durchschnittliche Temperatur von 700 °C vorgewärmten Eisenschrottmischung 8 in den schrägen, übertragenden/chargierenden Mechanismus 57 hinein. Der übertragende/chargierende Mechanismus 57 dient zum Übertragen und erzwungenen Chargieren der auf die erforderliche hohe Temperatur vorgewärmten Eisenschrottmischung 8 von der Vorwärmvorrichtung 1 her in den angrenzenden Lichtbogenelektroofen 2 durch eine Öffnung 76 in der Mantelseitenwand 78 hindurch, die während des Ofenkippvorgangs durch die wassergekühlte Tür 77 geschlossen ist. Der übertragende/chargierende Mechanismus 57 besteht aus einem teilweise wassergekühlten Trog oder Kanal von rechteckigem Querschnitt 58, mit einer Breite, die der Breite der Entladeöffnung 47 entspricht. Der rechteckige Kanal 58 ist mit einem internen, passenden, rechteckigen, sich hin- und herbewegenden Plungerkolben 61 ausgerüstet. Die Hin- und Herbewegungen des Plungerkolbens 61 innerhalb des rechteckigen Kanals 58 werden durch einen wassergekühlten, doppeltwirkenden Hydraulikzylinder 62 gesteuert. Der rechteckige Kanal 58 ist auf Rollen 60 angeordnet, die es ihm ermöglichen, entlang seiner Längsachse bewegbar zu sein. Ausfahrende und zurückziehende Bewegung des rechteckigen Kanals 58 entlang seiner Längsachse wird durch den doppeltwirkenden Hydraulikzylinder 59 gesteuert. Zum Aufnehmen der vorgewärmten Eisenschrottmischung von der Entladeöffnung 47 her weist die obere Wand des rechteckigen Kanals 58 eine Öffnung 63 auf, wobei deren Abmessungen und Lokation den Abmessungen der Entladeöffnung 47 entsprechen. In dem Standby-Nichtchargier-Modus wird der doppeltwirkende Zylinder 59 zurückgezogen, der rechteckige Kanal 58 von dem Lichtbogenelektroofen 2 her weggezogen, jedoch bleibt der Plungerkolben 61 in ausgefahrenem Modus innerhalb des Kanals 58 und bedeckt und versiegelt daher die gesamte Entladeöffnung 47, wodurch verhindert wird, daß die vorgewärmte Eisenschrottmischung in den chargierenden Mechanismus 57 fällt.

Um das erzwungene Übertragen und Chargieren der Hochtemperatur-Eisenschrottmischung 8 in den Lichtbogenelektroofen 2 zu beginnen, wird der Plungerkolben 61 innerhalb des rechteckigen Kanals 58 zurückgezogen, wodurch die Eisenschrottmischung 8 in den Hohlraum des rechteckigen Kanals 58 zu fallen vermag, der dann auf den Rollen 60 vorwärts bewegt wird und in den Lichtbogenelektroofen 2 eingefügt wird, durch Betätigen/Ausfahren des doppeltwirkenden Hydraulikzylinders 59. Die Vorwärtsbewegung des rechteckigen Kanals 58 verschließt mit seiner oberen Wand die Entladeöffnung 47. Da sich der doppeltwirkende Hydraulikzylinder 62 und der sich hin- und herbewegende Plungerkolben 61 in der zurückgezogenen Position befinden, bewegt sich die auf hohe Temperatur vorgewärmte Eisenschrottmischung 8/3 innerhalb des Kanals 58. Die Vorwärtsbewegung des sich hin- und herbewegenden Plungerkolbens 61, durch das Betätigen/Ausfahren des doppeltwirkenden Hydraulikzylinders 62 hervorgerufen, resultiert in einem Vorwärtsschieben der auf hohe Temperatur vorgewärmten Eisenschrottmischung 8 durch das Innere des rechteckigen Kanals 58 hindurch. Nach der Vorwärtsbewegung des Plungerkolbens 61 beginnt die auf hohe Temperatur vorgewärmte Eisenschrottmischung 8 in das Schmelzbad des Lichtbogenelektroofens 2, in der Nähe des Lichtbogens, zu fallen, wo sie durch direkte Konvektion rasch schmilzt, Obwohl die auf hohe Temperatur vorgewärmte Eisenschrottmischung 8 durch das Innere des schrägen rechteckigen Kanals 58 hindurch graduell geschoben wird, ist, infolge des relativ geringen Reibungsfaktors, nur eine moderate Kraft für den Schiebevorgang erforderlich.

Der nächste Zweck und die nächste Aufgabe der unteren Abteilung 7 besteht darin, eine zusätzliche, höchstmögliche Verbrennung des Gasgemisches, das nach unten durch die Eisenroste 4 hindurch in die freien Räume 11 und 12 über der Eisenschrottmischung 8 strömt, zu ermöglichen und sicherzustellen. Wiederum haben, wie in der vorherigen Stufe, die Gase mit zunächst höherer Temperatur, wenn sie durch die Eisenschrottmischung 8 nach unten strömen, einen bestimmten Betrag ihrer thermischen Energie auf die Eisenschrottmischung 8 übertragen und müssen wiederum temperaturkonditioniert werden auf die optimale, erforderliche Temperatur. Um die endgültige, erforderliche, zusätzliche und adäquate, maximale Verbrennung des Gasgemisches, das durch die Eisenroste 4 in die freien Räume 11 und 12 über der Eisenschrottmischung 8 in der unteren Abteilung 7 nach unten strömt, mit gleichzeitiger, endgültiger Erhöhung der Temperatur der Gase, zu erreichen, werden standardisierte Oxy-Fuel-Brenner 13 mit variablem Brennstoff-Sauerstoff-Verhältnis in der gleichen Weise wie in der oberen Abteilung 5 und mittleren Abteilung 6 verwendet. Die standardisierten Brenner 13 werden in der gleichen Weise wie in der vorherigen oberen Abteilung 5 und mittleren Abteilung 6 gesteuert. Die gleichlaufende Abwärtsströmung der nochmals wiedererhitzten Gase wird, nach Durchströmen der Eisenschrottmischung 8, aus der unteren Abteilung 7 durch die zwei rechteckigen Öffnungen 45, Fig. 3, in die divergierenden, feuerfest ausgekleideten, rechteckigen Kanäle 48 ausgestoßen, die mit Drosselschließventilen 46 ausgerüstet sind, um eine Strömung der Gase von der Vorwärmvorrichtung 1 her zu verhindern, wenn erforderlich, während des Betriebs ohne die Vorwärmvorrichtung 1, und um eine Umleitungsströmung der Gase aus dem Lichtbogenelektroofen 2 direkt in die staubauffangenden, divergierenden, rechteckigen, feuerfest ausgekleideten Kanäle 48 zu ermöglichen. Die Innenräume 49 der Kanäle 48 dienen auch als endgültige Nachverbrennungskammern 79. Aus diesem Grund sind sie mit standardisierten Oxy-Fuel-Brennern 13 ausgerüstet, die in der gleichen Weise wie in den Abteilungen 5, 6 und 7 gesteuert werden. Die Kanalinnenräume 49 sind mit dem oberen Teil der Drop-out-Box 50 verbunden, wo die ausgestoßenen Gase, nach Verlust ihrer Geschwindigkeit, das Sedimentieren von schwereren Staubpartikeln 51 an dem Boden der Drop-out-Box 50 zulassen. Die total verbrannten Gase, mit einer höheren Temperatur als der kritische Wert, der für das Verbrennen/Cracking von unerwünschten flüchtigen Kohlenwasserstoffen, einschließlich Dioxine und Furane, erforderlich ist, werden über einen invertierten Gaskanal 53 an der mittleren Spitze der Drop-out-Box 50 durch die Öffnung 52 und den Kanal 54 hindurch ausgestoßen, zur weiteren Nutzung und Behandlung. Zur zusätzlichen Verbesserung der Energierückgewinnung wird ein Anteil der heißen Abgase aus dem Kanal 54 über einen Kanal 55, der mit einem Drosselschließventil 56 ausgerüstet ist, in die obere Abteilung 5 durch die Öffnung 39 hindurch zurückgeleitet.

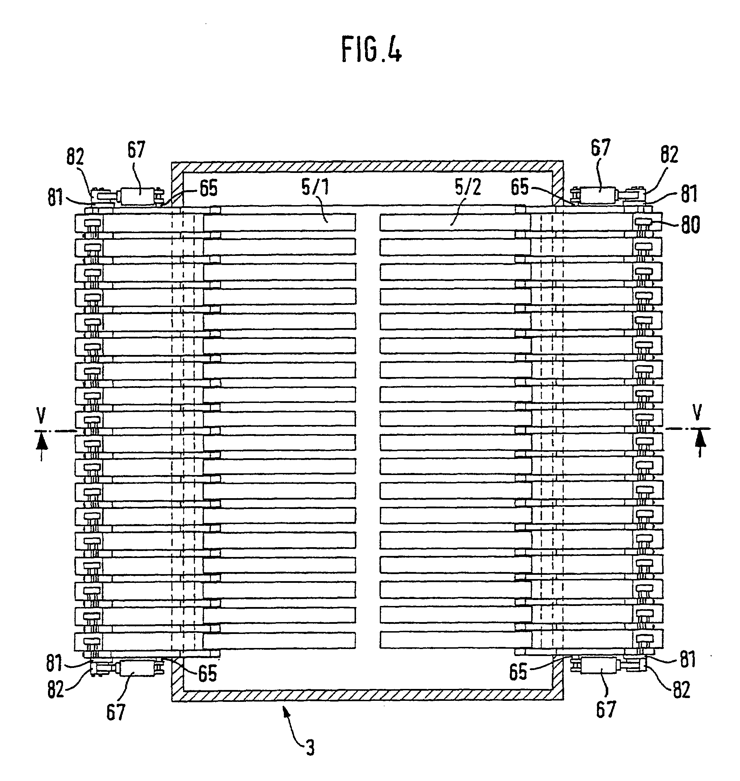

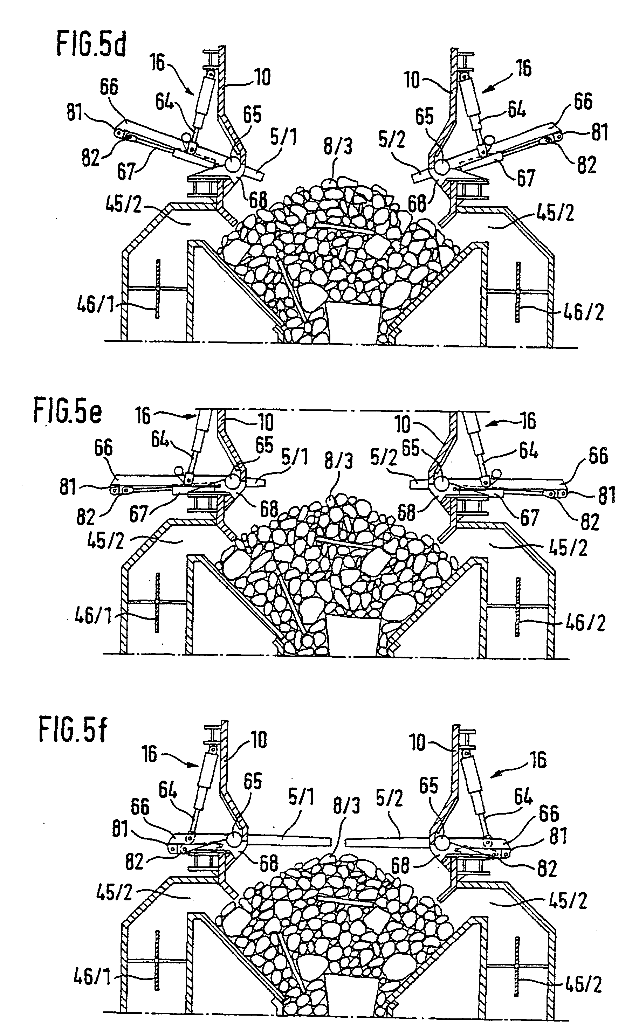

Eines der wichtigen Merkmale der dargestellten Ausführungsform ist die Steuerung der semikontinuierlichen Gravitations-Abwärtsbewegung der Eisenschrottmischung 8, durch die Mechanismusbauteilgruppen 16, (kurz "Abwärtsbewegungs-Steuerungsmechanismus 16" genannt), in unterschiedlichen Ansichten und Querschnitten, ganz oder teilweise, in Fig. 1, Fig. 2, Fig. 3, Fig. 4 dargestellt. Zum besseren Verständnis der charakteristischen und vorteilhaften, funktionellen Bewegungen der Teile und Komponenten des Abwärtsbewegungs-Steuerungsmechanismus 16 sind detaillierte, vertikale Querschnitte nach der Linie V-V der Fig. 4 in Fig. 5a; Fig. 5b; Fig. 5c, Fig. 5d; Fig. 5e und Fig. 5f dargestellt. Die grundlegenden funktionellen Komponenten der Abwärtsbewegungs-Steuerungsmechanismen 16 sind: stationäre, wassergekühlte Mehrfachpunkt-Rahmenabstützungen 68, Hauptrotierrahmen 66, rotationssteuernde, doppeltwirkende Hydraulikzylinder 64, das Ausfahren und die Rückziehung der Eisenroste 4 steuernde, doppeltwirkende Hydraulikzylinder 67 sowie ein verbindender Träger 81. Der Hauptrotierrahmen 66 ist eine einstückige, mechanische Struktur, die beabstandete, rechteckige Führungsöffnungen für jeden der Eisenroste 4 kennzeichnet und deren Bewegung entlang ihrer Längsachse zuläßt. Eine Rotation des Hauptrotierrahmens 66 wird durch scheibenförmige Verlängerungen 65 möglich gemacht, an den Hauptrotierrahmen 66 angefügt und in den Zwischenräumen zwischen den rechteckigen Führungsöffnungen des Hauptrotierrahmens 66 angeordnet. An dem anderen Außenende des Rotierrahmens sind an seinem oberen Teil Rollen 80 angefügt, zur Reduzierung der Reibung zwischen der rotierenden Rahmenstruktur 66 und den einzelnen Eisenrosten 4 während ihrer Bewegung entlang ihrer Längsachse. Jeder der Eisenroste 4 ist an seinem Außenende über eine Verbindung 82 des Stabkopf/Schäkel-Typs mit dem horizontal ausgerichteten Träger 81 verbunden. Der Träger 81 ist über den doppeltwirkenden Hydraulikzylinder 67 mit dem Hauptrotierrahmen 66 verbunden. Die Rotation des Hauptrotierrahmens 66 um die Mittellinie seiner scheibenförmigen Verlängerungen 65 herum, in passende, halbkreisförmige Öffnungen der stationären Mehrfachpunktabstützungen 68 frei eingefügt, wird durch Zurückziehen oder Ausfahren der einzelwirkenden, teleskopischen Hydraulikzylinder 64 gesteuert. (Anmerkung des Übersetzers: vorher waren "doppeltwirkende Hydraulikzylinder 64 erwähnt.)

Wie in Fig. 5a dargestellt, ist in ihrer grundlegenden Betriebsposition die kammförmige Formation der Eisenrost-Bauteilgruppen 4 horizontal einwärts verlängert in die vertikale Hauptvorwärmkammer 3, zum Halten und Verhindern der Gravitationsabwärtsbewegung der Eisenschrottmischung 8. Dies wird durch Druckbeaufschlagung der ausgefahrenen, teleskopischen Hydraulikzylinder 64 erreicht. Wenn eine gesteuerte Gravitationsabwärtsbewegung der Eisenschrottmischung 8 gewünscht wird, wird das Zurückziehen der normalweise ausgefahrenen, einzelwirkenden, teleskopischen Hydraulikzylinder 64 initiiert durch eine gesteuerte Freigabe des Hydraulikfluids von dem Zylinder 64 her. Wie in Fig. 5b dargestellt, rotieren, infolge der Masse der Eisenschrottmischung 8, der Hauptrotierrahmen 66, einschließlich der verlängerten Eisenroste 4, um die Mittellinie der scheibenförmigen Rahmenverlängerungen 65, was die Innenenden der verlängerten, kammartigen Eisenroste 4 dazu bringt, nach unten zu rotieren. Durch diesen gesteuerten anfänglichen Vorgang wird es einem Anteil der Eisenschrottmischung 8 ermöglicht, sich durch Schwerkraft in die untere Abteilung 7 abwärtszubewegen. Um die Gravitationsabwärtsbewegung der gesamten Ladung der Eisenschrottmischung 8 in die untere Abteilung 7 zu vervollständigen, werden die doppeltwirkenden Hydraulikzylinder 67 betätigt. Da die Zylinder 67 zwischen der Struktur des Hauptrotierrahmens 66 und dem horizontal ausgerichteten Träger 81 eingebaut sind, werden beide Eisenrost-Bauteilgruppen 4 in im allgemeinen vertikaler Richtung von der Abteilung 7 her weggezogen, wodurch der Rest der Eisenschrottmischung durch Schwerkraft in die untere Abteilung 7 hinabzufallen vermag, wie in Fig. 5c dargestellt. Um die kammartige Eisenrost-Formation 4 in ihre anfängliche einwärtseingefügte Position zurückzubringen, werden die Hydraulikzylinder 64 ausgefahren, wodurch der Hauptrotierrahmen 66, einschließlich der zurückgezogenen Eisenroste 4, dazu gebracht wird, hauptsächlich durch Schwerkraft in ihre horizontale Position zurückzukehren, wie in Fig. 5d und Fig. 5e dargestellt. Nachdem dieser erste Schritt durchgeführt ist, werden die doppeltwirkenden Hydraulikzylinder 67 betätigt sich zurückzuziehen. Das Zurückziehen der Hydraulikzylinder 67 hat die Ohne-Last-Einfügung der kammartigen Eisenrost-Formation 4 zur Folge, um ihre anfängliche, horizontale Position, über der Eisenschrottmischung 8 in der unteren Abteilung, in Fig. 5f dargestellt, einzunehmen. Durch das Einnehmen ihrer anfänglichen, eingefügten, horizontalen Position sind die Eisenrost-Bauteilgruppen 4 sofort betriebsbereit, die Übertragung einer anderen teilweise vorgewärmten Ladung der Eisenschrottmischung 8 von der oberen Abteilung 5 her aufzunehmen. Die beschriebenen, einzigartigen, sequentiellen rotierenden und zurückziehenden/ausfahrenden Bewegungen des Hauptrotierrahmens 66 und der kammartigen Eisenrost-Formation 4 sind ein sehr wichtiges Merkmal der Ausführungsform. Die beschriebene Anordnung eliminiert Verzögerungen und Wartezeiten und reduziert die Gesamtkonstruktionshöhe der Vorwärmvorrichtung 1. Dies wiederum ermöglicht den Einbau der Eisenschrottmischung-Vorwärmvorrichtung 1 in bestehende Stahlwerke, was äußerst wichtig ist, um die Installationskosten signifikant zu reduzieren.

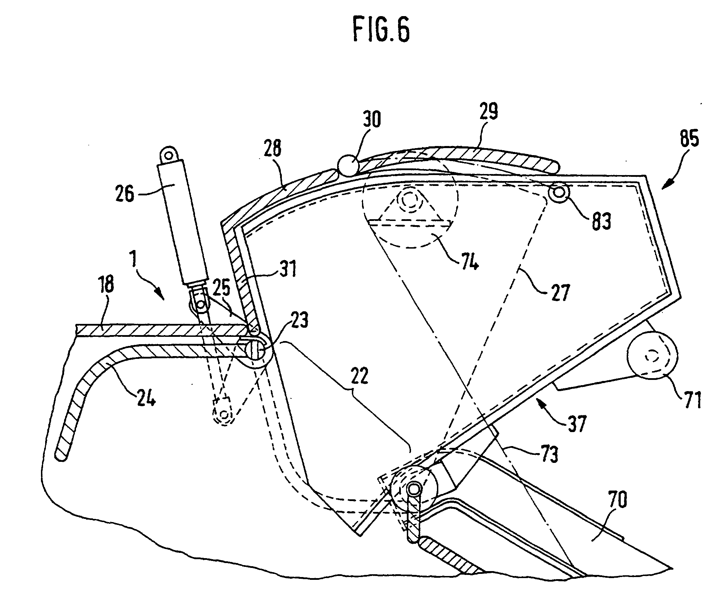

Gemäß der Erfindung schließt eine bevorzugte Ausführungsform einen integralen Schrägaufzug-Mechanismus 72 ein, der zum Heben der kalten Eisenschrottmischung 8, mittels des Kaltschrottbehälters 37, dient, zum semikontinuierlichen Selbstchargieren des Vorwärmvorrichtungs- und Prozeßsystems 1, in Fig. 1 und noch detaillierter in Fig. 6 dargestellt. Die Hauptkomponente des Schrottaufzug-Mechanismus 72 ist der Kaltschrottbehälter 37, von einfacher Hochleistungskonstruktion, mit spezifischer Gestalt und adäquatem Volumen und mit Rädern 71 ausgerüstet. Die Räder 71 werden durch die robusten und entsprechend gestalteten U-Profilführungen 70 erfaßt und geführt, wodurch der Kaltschrottbehälter 37 dazu gebracht wird, sich von seiner unteren Beladeposition, in Fig. 1 dargestellt, in die obere Entladeposition, in Fig. 6 dargestellt, gemäß einem genau vorbestimmten Pfad, zu bewegen, der durch die Konfiguration der Führungen 70 bestimmt wird. Die Hebe- und Senkbewegung des Kaltschrottbehälters 37 wird gesteuert durch die Hubvorrichtung 75, die Kabel 73, die kabelumlenkenden Riemenscheiben 89 und die kabelrichtungsreversierenden Riemenscheiben 74. Die Kabel 73 sind mit den Seiten des Kaltschrottbehälters 37 über Schwenkverbindungen 83 verbunden.

Der Schrägaufzug-Mechanismus 72 hat eine vorteilhafte, zuverlässige und praktisch wartungsfreie einfache Funktionsweise, perfekt geeignet für die extremen Stahlwerk-Betreibungskonditionen. Wenn im Hubmodus betätigt, hebt die Hubvorrichtung 75 den Kaltschrottbehälter 37, der zuvor mit einer adäquaten Menge der kalten Eisenschrottmischung 8 beladen wurde, über die Kabel 73 und Riemenscheiben 89 und 74 von seiner unteren Kaltschrott-Beladeposition (Fig. 1) in die obere Kaltschrott-Entladeposition (Fig. 6). Für das versiegelte Chargieren der Vorwärmvorrichtung 1 rotiert, sobald die quadratische, obere Profil-Leiste des Kaltschrottbehälters 37 die Leiste 27 erreicht und in den quadratischen Hohlraum an der Spitze der Vorwärmvorrichtung 1 eintritt, der doppeltwirkende Hydraulikzylinder 26 den abdichtenden Verschluß 24, wodurch die Öffnung 22 vollständig befreit wird. Auf diese Weise schaffen das quadratische Profil des Hohlraums in dem oberen Teil der Vorwärmvorrichtung 1 und das quadratische Profil des oberen Teils des Schrottbehälters 37 eine adäquate dynamische Abdichtung, die eine Verbindung zwischen dem Raum 38 der oberen Abteilung 5 und der umgebenden Atmosphäre verhindert. Eine rotierende Entfernung des abdichtenden Verschlusses 24 ermöglicht freies und ungehindertes Entladen der kalten Eisenschrottmischung 8 in die obere Abteilung 5. Nach dem Entleeren der kalten Eisenschrottmischung 8 aus dem Kaltschrottbehälter 37 wird die Hubvorrichtung 75 in den Senkmodus reversiert, und der Kaltschrottbehälter 37 kehrt in seine untere Beladeposition 84 zurück. Der abdichtende Verschluß 24 wird durch den Zylinder 26 geschlossen, bevor die dynamische Abdichtung zwischen dem Kaltschrottbehälter 37 und dem oberen, quadratischen Hohlraum der Vorwärmvorrichtung 1 unterbrochen wird, durch Rückbewegung des Kaltschrottbehälters 37.

Falls für die Wartungs- oder Betriebserfordernisse notwendig, könnten die heißen Gase aus dem Lichtbogenelektroofen 2 von dem Hauptkanal 20 her, durch die Umleitungsöffnung 87 hindurch, in die zwei Umleitungskanäle 86 umgeleitet werden, durch Öffnen der Umleitungs-Drosselventile 88.

Die heißen Gase werden dadurch in die endgültigen Verbrennungskammern 79 gerichtet, daß die quadratische, wassergekühlte Tür 32 ebenfalls geschlossen wird, nach Betätigung durch den Hydraulikzylinder 26, und durch Schließen der normalerweise geöffneten Drosselventile 46.

Obwohl sich die obige Beschreibung und die beigefügten Zeichnungen auf eine spezifische, bevorzugte Ausführungsform beziehen, wie sie derzeit durch den Erfinder in Betracht gezogen wird, sei darauf hingewiesen, daß die Erfindung, in ihrem breiten Aspekt, mechanische und funktionelle Äquivalente der beschriebenen und dargestellten Elemente einschließt.

### TEILE-LISTE

- 1: Schrottvorwärmvorrichtung
- 2: Lichtbogenelektroofen
- 3: Vorwärmkammer
- 4: Eisenroste
- 5: obere Abteilung
- 6: mittlere Abteilung
- 7: untere Abteilung
- 8: Schrottmischung
- 9: - - - -
- 10: das kürzere untere Wandteilstück
- 11: Hohlräume
- 12: der freie Raum
- 13: die Oxy-Fuel-Brenner
- 14: hitzebeständig ausgekleidete Wände
- 15: das längere untere Wandteilstück
- 16: der durch Hydraulikzylinder betätigte Hebelmechanismus
- 17: die kürze obere Wand
- 18: das horizontale Verschließpaneel
- 19: Öffnung
- 20: Hauptkanal
- 21: obere Wand
- 22: Chragieröffnung
- 23: Schacht
- 24: versiegelnder Verschluß
- 25: Hebelmechanismus
- 26: Hydraulikzylinder
- 27: obere Wand
- 28: gebogenes Paneel
- 29: gebogenes Paneel
- 30: Schacht
- 31: vertikales Wandpaneel
- 32: Tür
- 33: Schacht
- 34: Hebelmechanismus
- 35: Hydraulikzylinder
- 36: ----
- 37: Schrottbehälter
- 38: Innenraum
- 39: Öffnung
- 40: Sensoren
- 41: wassergekühltes, gestaltetes Segment
- 42: wassergekühltes, gestaltetes Segment
- 43: wassergekühltes, gestaltetes Segment
- 44: wassergekühltes, gestaltetes Segment
- 45: rechteckige Öffnungen
- 46: Drosselventile
- 47: rechteckige Öffnung
- 48: hitzebeständig ausgekleideter Kanal
- 49: Innenraum
- 50: Drop-out-Box
- 51: Staubpartikel
- 52: Öffnung
- 53: invertierter Gaskanal
- 54: Kanal
- 55: Kanal
- 56: Drosselventil
- 57: Chargiermechanismus
- 58: rechteckiger Kanal
- 59: ----
- 60: Rollen
- 61: hin- und herbewegbarer Plungerkolben
- 62: doppeltwirkender Hydraulikzylinder
- 63: Öffnung
- 64: die Hydraulikzylinder
- 65: scheibenförmige Verlängerungen
- 66: Hauptrotierrahmen
- 67: doppeltwirkender Hydraulikzylinder
- 68: wassergekühlte Abstützungen
- 69: ----
- 70: U-Profil-Führungen
- 71: Räder
- 72: selbstchargierende Einrichtungs-Bauteilgruppe
- 73: Kabel
- 74: Riemenscheibe
- 75: Hubeinrichtung
- 76: Öffnung
- 77: wassergekühlte Tür
- 78: Mantelseitenwand
- 79: endgültige Nachverbrennungskammer
- 80: Rollen
- 81: verbindender Träger
- 82: Schäkel-Verbindung
- 83: Schwenkverbindung
- 84: ----
- 85: ----
- 86: Umleitungskanal
- 87: Umleitungsöffnung
- 88: Umleitungs-Drosselventil
- 89: Riemenscheibe

## Patentansprüche

1. Vorwärmvorrichtung (1) zum Vorwärmen einer Eisenschrottmischung vor dem Zuführen des Schrotts in einen metallurgischen Ofen (2),
wobei die Vorwärmvorrichtung eine durch gasdurchlässige Gattermittel (4) in mehrere Kammerabteilungen unterteilte Kammer (3) umfaßt und der durch eine Chargieröffnung (22) in die obere Kammerabteilung (5) eingeführte Kaltschrott von heißen Ofenabgasen durchströmt und erwärmt wird und der erwärmte Schrott durch Ausnutzen der Gravitationskraft in der Kammer (3) nach unten fällt,
wobei eine untere Abteilung (7) der Kammer (3) Entlademittel (57) für den erwärmten Schrott zum Zuführen des erwärmten Schrotts (8/2) in den Ofen (2) einschließt, wobei die Entlademittel (57) einen konvergierenden Boden mit schrägen Bodenwänden der unteren Abteilung mit einer Bodenöffnung (47), sowie einen Chargierzanal (58) aufweisen, der Sich zwischen der Bodenöffnung (47) und dem Ofen (2) erstreckt,
wobei die gasdurchlässigen Gattermittel (4) zwischen jeder der genannten Kammerabteilungen (5; 7) angeordnet und zwischen einer geschlossenen Gatterposition und einer offenen Gatterposition sequentiell betätigbar sind zum gleichlaufenden Aufnehmen der durch Schwerkraft zugeführten Schrottcharge in einer geschlossenen Gatterposition,
wobei sie während einer vorbestimmten Verweildauer die genannte Charge tragen und zum Steuern der Gravitationsabwärtsbewegung der genannten Charge dienen, wenn sie sich in der offenen Position befinden aus der oberen Abteilung in die untere Abteilung nach Ablauf der Verweildauer,
mit einem Vorwärmen des Schrotts hauptsächlich unter Ausnutzung von zurückgewonnener Wärme aus den heißen Abgasen, die aus der Ofenauslaßöffnung emittiert wurden,
wobei während des Tragens der Charge durch die gasdurchlässigen Gattermittel (4) heißes Abgas durch die Schrottcharge und die geschlossenen Gattermittel hindurch strömt
und gleichzeitig mit dem Vorwärmen des Schrotts Verseuchungsstoffe aus dem Schrott und aus den Abgasen reduziert werden,
**dadurch gekennzeichnet,**
**daß** die obere Kammerabteilung (5) einen Heißabgaseinlaß (20) in Strömungsverbindung mit der Ofenauslaßöffnung, und
die untere Abteilung (7) der Kammer (3) einen Abgasauslaß in Strömungsverbindung mit Vakuummitteln zum Evakuieren verbrauchten Abgases einschließt,
**daß** die Abwärtsströme der heißen Abgase und des nach unten fallenden Schrotts gleichlaufend sind,
und **daß** der Chargierkanal (58), der sich zwischen der Bodenöffnung (47) und *einer Öffnung (76) in der Mantelseitenwand (78)* des Ofens (2) erstreckt, einen Sammelraum für den erwärmten Schrott darstellt der durch die Bodenöffnung (47) hindurch fällt, sowie Zwangszuführungsmittel (61, 62) für den erwärmten Schrott zum Drükken des Schrotts in den Ofen durch den Chargierkanal (58) aufweist.

2. Vorwärmvorrichtung nach Anspruch 1, **dadurch gekennzeichnet, daß** die gasdurchlässigen Gattermittel (4) aufweisen:
zwei gegenüberliegende spiegelbildlich angeordnet Eisenrost-Bauteilgruppen (4/1; 4/2; 5/1; 5/2), die sich in die Kammer erstrecken;
Eisenrost-Kippmittel (64) zum Drehen der Eisenrost-Bauteilgruppen aus einer horizontalen, schrottabstützenden, geschlossenen Position in eine nach unten schräge offene Position, und
Eisenrost-Axialverlängerungs- und Zurückziehungsmittel (67) zum Zurückziehen der Eisenrost-Bauteilgruppen innerhalb der Kammer in eine zurückgezogene Position und zum Verlängern der Eisenrost-Bauteilgruppen, horizontal in eine verlängerte Position.

3. Vorwärmvorrichtung nach Anspruch 2, **dadurch gekennzeichnet, daß** die Eisenrost-Bauteilgruppen eine Mehrzahl von beabstandeten Eisenrosten aufweisen, die sich innerhalb der Kammer erstrecken.

4. Vorwärmvorrichtung nach Anspruch 1, **dadurch gekennzeichnet, daß** die Zwangszuführungsmittel für den erwärmten Schrott, einen sich hin- und herbewegenden Kolben aufweisen, mit einer schrottschiebenden Stirnwand, wobei der Kolben betätigbar ist zwischen einer Standby-Position, in der eine Charge aus erwärmten Schrott durch die untere Öffnung hindurch fällt, um sich vor der Stirnwand zu sammeln, und einem Chargiermodus, in welchem der Kolben den erwärmten Schrott in den Ofen stößt.

5. Vorwärmvorrichtung nach Anspruch 1, **dadurch gekennzeichnet, daß** die Kammer mindestens eine Zwischenabteilung (6) einschließt, die zwischen den oberen und unteren Abteilungen angeordnet ist, wobei die gasdurchlässigen Gatter zwischen jeder Abteilung angeordnet sind.

6. Vorwärmvorrichtung nach Anspruch 1, **dadurch gekennzeichnet, daß** jede Abteilung Sensormittel einschließt, zum Überwachen der Charakteristiken des darin befindlichen Abgases und Schrotts, wobei die Charakteristiken der chemischen Zusammensetzung des Gases, der Gastemperatur, des Gasdruckes sowie der Schrottemperatur, zum Steuern der Brenner herangezogen wird.

7. Vorwärmvorrichtung nach Anspruch 1, **dadurch gekennzeichnet, daß** jede Abteilung Abteilungs-Brenner-Mittel (13) einschließt, zum Steuern der Verbrennungsrate und der Temperatur des darin befindlichen Abgases und Schrotts.

8. Vorwärmvorrichtung nach Anspruch 1, **dadurch gekennzeichnet, daß** der Heißabgaseinlaß (20) einen Umleitungskanal einschließt, in Strömungsverbindung mit dem Abgasauslaß, und Umleitungs-Ventilmittel, zum Umlenken des heißen Abgases direkt nach dem Abgasauslaß hin.

9. Vorwärmvorrichtung nach Anspruch 1, **dadurch gekennzeichnet, daß** die Kaltschrotteingabemittel ein Chargierbehälter Pendelsystem zwischen einer Beladeposition, von der Kammer entfernt, und einer Entladeposition, die sich innerhalb einer versiegelbaren Öffnung (22) in der oberen Abteilung erstreckt, aufweisen.

10. Vorwärmvorrichtung nach Anspruch 9, **dadurch gekennzeichnet, daß** die versiegelte Öffnung (22) mindestens eine versiegelte Tür (24) aufweist, und bei der die Innenkanten der versiegelten Öffnung zu den angrenzenden Außenwänden des Chargierbehälters in der Entladeposition passen.

11. Vorwärmvorrichtung nach Anspruch 9, **dadurch gekennzeichnet, daß** der Chargierkübel (37) auf einer schrägen Heberampe (70) rollt, die durch eine Hubeinrichtung (75) angetrieben wird.

12. Vorwärmvorrichtung nach Anspruch 1, **dadurch gekennzeichnet, daß** der Abgasauslaß eine Nachverbrennungsabteilung einschließt, mit Trennmitteln zum Reduzieren der Feststoff-Verseuchungssubstanzen aus dem Abgas.

13. Vorwärmvorrichtung nach Anspruch 12, **dadurch gekennzeichnet, daß** die Nachverbrennungskammer (79) Nachbrennermittel einschließt, zum Verbrennen der verbrennbaren Verseuchungsstoffe in dem darin befindlichen Abgas.

14. Vorwärmvorrichtung nach Anspruch 12, **dadurch gekennzeichnet, daß** ein Gas-Recycling-Kanal (55) eingeschlossen ist, zur Verbindung zwischen der Nachverbrennungsabteilung und der oberen Abteilung.

15. Vorwärmvorrichtung nach Anspruch 12, **dadurch gekennzeichnet, daß** die Mittel zum Trennen einen vertikal gebogenen Kanal aufweisen.

16. Vorwärmvorrichtung nach Anspruch 12, **dadurch gekennzeichnet, daß** die Mittel zum Trennen einen konisch erweiterten Diffusor-Kanal aufweisen.

17. Vorwärmvorrichtung nach Anspruch 12, **dadurch gekennzeichnet, daß** die Mittel zum Trennen eine Feststoffpartikel-Dropout-Box (50) einschließen.

18. Verfahren zum Vorwärmen einer Eisenschrottmischung vor dem Zuführen des Schrotts in einen metallurgischen Ofen (2) unter Ausnutzung von Wärme, die aus heißen Abgasen, die aus der Ofenauslaßöffnung emittiert wurden, zurückgewonnen werden,
wobei eine Charge aus kaltem Schrott (8/1) auf einem gasdurchlässigen, geschlossenen Gatter (4/1; 4/2) innerhalb einer oberen Abteilung (5) einer von den heißen Ofenabgasen durchströmten Kammer (3) deponiert wird,
der Schrott auf dem geschlossenen Gatter für eine vorbestimmte Verweildauer gelagert wird und
die Charge durch Öffnen des Gatters (4/1; 4/2; 5/1; 5/2) gesteuert wird und ein Schrottstrom aus der oberen Abteilung (5) in eine mit einer Bodenöffnung (47) ausgestattete untere Abteilung (7) nach Ablauf der Verweildauer, sowie durch einen Chargierkanal (58) in den Ofen (2) ermöglicht wird,
wobei gleichzeitig Verseuchungsstoffe aus dem Schrott und aus den Abgasen im Strom der heißen Abgase und des nach unten fallenden Schrotts reduziert werden,
**dadurch gekennzeichnet,**
**daß** die Abwärtsströme der heißen Abgase zur *Vorwärmung des Schrotts* und des nach unten fallenden Schrotts gleichlaufend sind,
wobei die obere Abteilung (5) der Kammer (3) einen Heißabgaseinlaß (20) in Strömungsverbindung mit der Ofenauslaßöffnung und die untere Abteilung (7) der kammer (3) einen Abgasauslaß einschließt,
und **daß** der erwärmte Schrott (8/2) *durch den Chargierkanal (58), der sich zwischen der Boder Offnung der unteren Kammerabteilung (7) und einer Öffnung (76) in der Mantelseitenwand (78) des Ofens (2) erstreckt, in den Ofen (2) gedrückt wird.*

19. Verfahren nach Anspruch 18, **dadurch gekennzeichnet, daß** der Verfahrensschritt, den Schrott für die genannte Verweildauer zu lagern, weiteres Erwärmen des Abgases und des Schrotts durch Abteilungs-Brenner innerhalb jeder Abteilung einschließt.

## Claims

1. Preheating device (1) for preheating a scrap iron mixture prior to feeding of the scrap to a metallurgical furnace (2), wherein the preheating device comprises a chamber (3), which is subdivided into several chamber compartments by a gas-permeable grating means (4), the cold scrap introduced into the upper chamber compartment (5) through a charging opening (22) is flowed through and heated by hot furnace exhaust gases and the heat scrap can fall down into the chamber (3) through utilisation of gravitational force, wherein a lower compartment (7) of the chamber (3) includes discharging means (57) for the heated scrap for feeding the heated scrap (8/2) into the furnace (2), wherein the discharging means (57) comprises a convergent base with inclined walls of the lower compartment with a base opening (47), as well as a charging channel (58) which extends between the base opening (47) and the furnace (2), wherein the gas-permeable grating means (4) is arranged between each of the said chamber compartments (5; 7) and are sequentially actuable between a closed grating position and an open grating position for synchronously receiving the scrap charge, which is fed by gravitational force, in a closed grating position, wherein they support the said charge during a predetermined dwell time and serve for control of the gravitationally downward movement of the said charge, when they are disposed in the open position, from the upper compartment to the lower compartment after elapsing of the dwell time, with a preheating of the scrap principally with utilisation of recovered heat from the hot exhaust gases emitted from the furnace outlet opening, wherein during support of the charge by the gas-permeable grating means (4) hot exhaust gas flows through the scrap charge and the closed grating means and contaminants from the scrap and the exhaust gases are reduced simultaneously with the preheating of the scrap, **characterised in that** the upper chamber compartment (5) includes a hot exhaust gas inlet (20) in flow connection with the furnace outlet opening and the lower compartment (7) of the chamber (3) includes an exhaust gas outlet in flow connection with vacuum means for the evacuation of used exhaust gases, that the downward flows of the hot exhaust gases and the downwardly falling scrap are synchronous and that the charging channel (58), which extends between the base (47) and an opening (76) in the casing side wall (78) of the furnace (2), represents a collecting chamber for the heated scrap which falls through the base opening (47), as well as comprises forcible feed means (61, 62) for the heated scrap to press the scrap into the furnace through the charging channel (58).

2. Preheating device according to claim 1, **characterised in that** the gas-permeable grating means (4) comprises: two iron grid subassemblies (4/1; 4/2; 5/1; 5/2) which are arranged opposite one another in mirror image and extend in the chamber; iron grid tipping means (64) for rotating the iron grid subassemblies out of a horizontal, scrap-supporting closed position into a downwardly inclined open position; and iron grid axial extension and retraction means (67) for retracting the iron grid subassemblies within the chamber into a retracted position and for extending the iron grid subassemblies horizontally into an extended position.

3. Preheating device according to claim 2, **characterised in that** the iron grid subassemblies comprise a plurality of spaced-apart iron grids which extend within the chamber.

4. Preheating device according to claim 1, **characterised in that** the forcible feed means for the heated scrap comprise a reciprocatingly movable piston, with a scrap-displacing end wall, wherein the piston is actuable between a standby position in which a charge of the heated scrap falls through the lower opening in order to collect in front of the end wall and a charging mode in which the piston knocks the heated scrap into the furnace.

5. Preheating device according to claim 1, **characterised in that** the chamber includes at least one intermediate compartment (6) which is arranged between the upper and lower compartments, wherein the gas-permeable gratings are arranged between each compartment.

6. Preheating device according to claim 1, **characterised in that** each compartment includes sensor means for monitoring the characteristics of the exhaust gas and scrap disposed therein, wherein the characteristics of the chemical composition of the gas, the gas temperature, the gas pressure and the scrap temperature are utilised for control of the burners.

7. Preheating device according to claim 1, **characterised in that** each compartment includes compartment burner means (13) for control of the combustion rate and the temperature of the exhaust gas and scrap disposed therein.

8. Preheating device according to claim 1, **characterised in that** the hot exhaust gas inlet (20) includes a bypass channel in flow connection with the exhaust gas outlet and bypass valve means for diverting the hot exhaust gas directly to the exhaust gas outlet.

9. Preheating device according to claim 1, **characterised in that** the cold scrap entry means comprise a charging container pendulation system between a charging position remote from the chamber and a discharging position extending within a sealable opening (22) in the upper compartment.

10. Preheating device according to claim 9, **characterised in that** the sealed opening (22) has at least one sealed door (24) and in which the inner edges of the sealed opening fit with the adjoining outer walls of the charging container in the discharging position.

11. Preheating device according to claim 9, **characterised in that** the charging bucket (37) rolls on an inclined lifting ramp (70), which is driven by a lifting device (75).

12. Preheating device according to claim 1, **characterised in that** the exhaust gas outlet includes a recombustion compartment with separating means for reducing the solid contaminants from the exhaust gas.

13. Preheating device according to claim 12, **characterised in that** the recombustion chamber (79) includes post-burner means for burning the combustible contaminants in the exhaust gas disposed therein.

14. Preheating device according to claim 12, **characterised in that** a gas recycling channel (55) is included for the connection between the recombustion compartment and the upper compartment.

15. Preheating device according to claim 12, **characterised in that** the means for separating comprise a vertical bent channel.

16. Preheating device according to claim 12, **characterised in that** the means for separating comprise a conically enlarging diffusor channel.

17. Preheating device according to claim 12, **characterised in that** the means for separating comprise a solid particle dropout box (50).

18. Method for preheating a scrap iron mixture prior to feeding of the scrap to a metallurgical furnace (2) with utilisation of heat recovered from hot exhaust gases which were emitted from the furnace outlet opening, wherein a charge of cold scrap (8/1) is deposited on a gas-permeable, closed grating (4/1; 4/2) within an upper compartment (5) of a chamber (3) flowed through by hot furnace exhaust gases, the scrap is stored on the closed grating for a predetermined dwell time and the charge is controlled by opening of the grating (4/1; 4/2; 5/1; 5/2) and a flow of scrap from the upper compartment (5) to a lower compartment (7), which is furnished with a base opening (47), is made possible after expiry of the dwell time as well as through a charging channel (58) into the furnace (2), wherein contaminants from the scrap and from the exhaust gases in the flow of the hot exhaust gases and the downwardly falling scrap are reduced at the same time, **characterised in that** the downward flows of the hot exhaust gases are for the preheating of the scrap and the downwardly falling scrap in parallel, wherein the upper compartment (5) of the chamber (3) includes a hot exhaust gas inlet (20) in flow connection with the furnace outlet opening and the lower compartment (7) of the chamber (3) includes an exhaust gas outlet, and that the heated scrap (8/2) is forced into the furnace (2) through the charging channel (58), which extends between the base opening of the lower chamber compartment (7) and an opening (76) in the casing side wall (78) of the furnace (2).

19. Method according to claim 18, **characterised in that** the method step of storing the scrap for the said dwell time includes further heating of the exhaust gas and the scrap by compartment burners within each compartment.

## Revendications

1. Dispositif (1) pour le préchauffage d'un mélange de riblons de fer avant l'arrivée des riblons dans un four métallurgique (2),
le dispositif pour le préchauffage comprenant une chambre (3) subdivisée en plusieurs compartiments de chambre par des portes (4) perméables au gaz et les riblons froids, introduits par une ouverture de chargement (22) dans le compartiment de chambre (5) supérieur, étant parcourus et réchauffés par des gaz brûlés chauds de four et les riblons réchauffés tombant vers le bas dans la chambre (3) en utilisant la force de gravité,
un compartiment (7) inférieur de la chambre (3) incluant des moyens de déchargement (57) pour les riblons réchauffés pour l'arrivée des riblons (8/2) réchauffés dans le four (2), les moyens de déchargement (57) présentant un fond convergent avec des parois de fond inclinées du compartiment inférieur avec une ouverture de fond (47), et un canal de chargement (58), qui s'étend entre l'orifice de fond (47) et le four (2),
les portes (4) perméables au gaz étant disposées entre chacun des compartiments de chambre (5; 7) cités et pouvant être actionnées de façon séquentielle entre une position de forme fermée et une position de porte ouverte pour la réception synchrone de la charge de riblons amenée par gravité dans une position de porte fermée,
moyennant quoi elles portent la charge citée pendant une durée de séjour prédéfinie et servant à la commande du mouvement descendant par gravitation de la charge citée, lorsqu'elles se trouvent dans la position ouverte, du compartiment supérieur au compartiment inférieur après l'écoulement de la durée de séjour,
avec un préchauffage des riblons principalement en utilisant de la chaleur recyclée à partir des gaz brûlés chauds, qui ont été émis par l'ouverture de sortie de four, moyennant quoi des gaz brûlés chauds traversent la charge de riblons et les portes fermées pendant le transport de la charge par les portes (4) perméables aux gaz
et des produits de contamination constitués des riblons et des gaz brûlés sont réduits simultanément avec le préchauffage des riblons,
**caractérisé**
**en ce que** le compartiment de chambre (5) supérieur inclut une entrée de gaz chauds (20) dans la liaison d'écoulement avec l'ouverture de sortie du four et le compartiment inférieur (7) de la chambre (3) inclut une sortie de gaz brûlés dans la liaison d'écoulement avec des moyens à vide pour l'évacuation de gaz brûlés utilisés,
**en ce que** les flux descendants des gaz chauds et des riblons tombant vers le bas sont synchrones
et **en ce que** le canal de chargement (58), qui s'étend entre l'ouverture de fond (47) et *une ouverture* (*76*) *dans la paroi latérale d'enveloppa (78)* du four (2), représente un espace collecteur pour les riblons réchauffés, qui tombent à travers l'ouverture de fond (47), et présente des moyens d'amenée forcée (61, 62) pour les riblons réchauffés pour l'enfoncement des riblons dans le four par le canal de chargement (58).

2. Dispositif pour le préchauffage selon la revendication 1, **caractérisé en ce que** les portes (4) perméables aux gaz présentent les éléments suivants :
deux groupes de composants à grille en fer (4/1; 4/2; 5/1; 5/2) qui se font face de façon symétrique et s'étendent dans la chambre ;
des moyens de basculement à grille en fer (64) pour la rotation des ensembles de composants à grille en fer d'une position horizontale et fermée de soutien pour les riblons dans une position ouverte et inclinée vers le bas, et
des moyens de prolongement d'axe pour grille en fer et de recul (67) pour le recul des ensembles de composants à grille en fer à l'intérieur de la chambre dans une position reculée et pour le prolongement des ensembles de composants à grille en fer, au plan horizontal dans une position prolongée.

3. Dispositif pour le préchauffage selon la revendication 2, **caractérisé en ce que** les ensembles de composants à grille en fer présentent un grand nombre de grilles en fer espacées qui s'étendent à l'intérieur de la chambre.

4. Dispositif pour le préchauffage selon la revendication 1, **caractérisé en ce que** les moyens d'amenée forcée pour les riblons réchauffés présentent un piston qui peut se déplacer d'un côté et de l'autre, avec une face avant qui repoussent les riblons, le piston pouvant être actionné entre une position d'attente, dans laquelle une charge composée de riblons réchauffés tombe par l'ouverture inférieure, afin de se regrouper devant la face avant, et un mode de chargement dans lequel le piston pousse les riblons réchauffés dans le four.

5. Dispositif pour le préchauffage selon la revendication 1, **caractérisé en ce que** la chambre inclut au moins un compartiment intermédiaire (6), qui est disposé entre les compartiments supérieurs et les compartiments inférieurs, les portes perméables aux gaz étant disposées au milieu de chaque compartiment.

6. Dispositif pour le préchauffage selon la revendication 1, **caractérisé en ce que** chaque compartiment inclut des capteurs, pour le contrôle des caractéristiques des gaz brûlés et riblons se trouvant dedans, les caractéristiques de la composition chimique des gaz, de la température des gaz, de la pression des gaz et de la température des riblons étant utilisées pour la commande des brûleurs.

7. Dispositif pour le préchauffage selon la revendication 1, **caractérisé en ce que** chaque compartiment inclut des brûleurs de compartiment (13), pour la commande du taux de combustion et de la température des gaz brûlés et riblons de trouvant dedans.

8. Dispositif pour le préchauffage selon la revendication 1, **caractérisé en ce que** l'entrée des gaz brûlés chauds (20) inclut un canal de déviation, dans la liaison d'écoulement avec la sortie des gaz brûlés, et des soupapes de dérivation, pour la dérivation des gaz brûlés chauds directement après la sortie des gaz brûlés.

9. Dispositif pour le préchauffage selon la revendication 1, **caractérisé en ce que** les moyens d'entrée de riblons froids présentent un système de va-et-vient à conteneur de chargement entre une position de chargement, éloignée de la chambre, et une position de déchargement, qui s'étend à l'intérieur d'une ouverture (22) pouvant être scellée dans le compartiment supérieur.

10. Dispositif pour le préchauffage selon la revendication 9, **caractérisé en ce que** l'ouverture (22) scellée présente au moins une porte (24) scellée, et sur lequel les arêtes intérieures de l'ouverture scellée s'adaptent aux parois extérieures contiguës du conteneur de chargement dans la position de déchargement.

11. Dispositif pour le préchauffage selon la revendication 9, **caractérisé en ce que** la benne de chargement (37) roule sur une rampe de levage (70) inclinée, qui est entraînée par un système de levage (75).

12. Dispositif pour le préchauffage selon la revendication 1, **caractérisé en ce que** la sortie des gaz brûlés inclut un compartiment de post-combustion, avec des moyens de séparation pour réduire les substances de contamination solides provenant des gaz brûlés.

13. Dispositif pour le préchauffage selon la revendication 12, **caractérisé en ce que** la chambre de post-combustion (79) inclut des post-brûleurs, pour la combustion des produits de contamination combustibles dans les gaz brûlés se trouvant à l'intérieur.

14. Dispositif pour le préchauffage selon la revendication 12, **caractérisé en ce qu'**un canal de recyclage de gaz (55) est inclus, pour la liaison entre le compartiment de post-combustion et le compartiment supérieur.

15. Dispositif pour le préchauffage selon la revendication 12, **caractérisé en ce que** les moyens pour la séparation présentent un canal courbé dans le sens vertical.

16. Dispositif pour le préchauffage selon la revendication 12, **caractérisé en ce que** les moyens de séparation présentent un canal à diffuseur élargi en cône.

17. Dispositif pour le préchauffage selon la revendication 12, **caractérisé en ce que** les moyens de séparation incluent un boîtier pour évacuer les particules solides (50).

18. Procédé pour préchauffer un mélange de riblons de fer avant l'arrivée des riblons dans un four métallurgique (2) en utilisant de la chaleur qui est récupérée à partir de gaz brûlés chauds émis par l'ouverture de sortie de four,
une charge de riblons froids (8/1) étant déposée sur une porte (4/1; 4/2) fermée et perméable aux gaz à l'intérieur d'un compartiment (5) supérieur d'une chambre (3) parcourue par les gaz brûlés chauds du four,
les riblons étant logés sur la porte fermée pour une durée de séjour prédéfinie et
la charge étant commandée par l'ouverture de la porte (4/1; 4/2; 5/1; 5/2) et un flux de riblons provenant du compartiment (5) supérieur dans un compartiment (7) inférieur, équipé d'une ouverture de fond (47), après l'expiration de la durée de séjour et à travers un canal de chargement (58) dans le four (2) étant rendu possible,
moyennant quoi des produits de contamination composés des riblons et des gaz brûlés étant réduits simultanément dans le flux des gaz brûlés chauds et des riblons tombant vers le bas,
**caractérisé en ce que** les flux descendants des gaz brûlés chauds pour le *préchauffage des riblons* et des riblons tombant vers le bas sont synchrones,
le compartiment supérieur (5) de la chambre (3) incluant une entrée de gaz chauds (20) dans la liaison d'écoulement avec l'ouverture de sortie de four et le compartiment inférieur (7) de la chambre (3) incluant une sortie de gaz brûlés,
et **en ce que** les riblons (8/2) réchauffés *sont refoulés dans le four (2) par le canal de chargement (58), qui s'étend entre l'ouverture de fond du compartiment de chambre (7) inférieur et une ouverture (76) dans la paroi latérale d'enveloppe (78) du four (2).*

19. Procédé selon la revendication 18, **caractérisé en ce que** l'étape de procédé, qui consiste à stocker les riblons pour la durée de séjour mentionnée, inclut un nouveau réchauffement des gaz brûlés et des riblons par le brûleur de compartiment à l'intérieur de chaque compartiment.
